# EUROPÄISCHE PATENTSCHRIFT

(11) **EP 4 004 448 B1**
(45) Veröffentlichungstag und Bekanntmachung des Hinweises auf die Patenterteilung: **25.09.2024**
(21) Anmeldenummer: 20731796.7
(22) Anmeldetag: 13.05.2020
(51) Int. Cl.: F24D 19/10, G05D 23/19

(54) **EINSTELLVORRICHTUNG UND VERFAHREN ZUR ERMITTLUNG EINES HYDRAULISCHEN SCHWELLWERTS EINES VENTILS**
ADJUSTING DEVICE AND METHOD FOR DETERMINING A HYDRAULIC THRESHOLD OF A VALVE
DISPOSITIF DE RÉGLAGE ET PROCÉDÉ POUR DÉTERMINER UNE VALEUR-SEUIL HYDRAULIQUE D'UNE VANNE

(30) Priorität: 25.07.2019 DE 102019120126
(43) Veröffentlichungstag der Anmeldung: 01.06.2022
(73) Patentinhaber: STRAUB KG, 73337 Bad Überkingen (DE)
(72) Erfinder: STRAUB, Thomas, 73337 Bad Überkingen (DE); STRAUB, Philipp, 73337 Bad Überkingen (DE); LANDMESSER, Benjamin, 73337 Bad Überkingen (DE); PACKE, Christoph, 78713 Schramberg (DE); GOTTSTEIN, Dominik, 71384 Weinstadt (DE)
(74) Vertreter: Kuhnen & Wacker Patent- und Rechtsanwaltsbüro PartG mbB
(86) Internationale Anmeldenummer: PCT/EP2020/063334
(87) Internationale Veröffentlichungsnummer: WO 2021/013398

(56) Entgegenhaltungen:
- EP-A1- 3 431 888
- DE-A1- 102012 020 750
- DE-A1- 102017 123 560

## Beschreibung

Die vorliegende Anmeldung betrifft eine Einstellvorrichtung zur temperaturabhängigen, selbstregulierenden Einstellung eines Durchflussregelventils in einem Temperierungssystem und ein entsprechendes Verfahren mit Fokus auf eine Funktionalität, die darin besteht, einen hydraulischen Schwellwert eines Ventils zu ermitteln.

Nebengeordnete Teile des Gegenstands dieser Patentanmeldung bauen auf der Patentanmeldung DE 10 2017 123 560 A1 derselben Anmelderin auf. Die vorliegende Erfindung basiert auf nicht veröffentlichten, internen Erkenntnissen und Verbesserungen aus einer Produktentwicklung zu der Technik aus der genannten Patentanmeldung der Anmelderin. Teile der vorliegenden Offenbarung, der Zeichnung und nebengeordneter Ansprüche umfassen demzufolge Teile des älteren Anmeldungsgegenstandes, auf dessen Technik hierin Bezug genommen wird.

Ein technischer Hintergrund der Erfindung liegt in der Anwendung von Heizungs- und Klimatisierungsanlagen für Räume, wie insbesondere Fußbodenheizungen, Flächenheizungen oder Kühldecken, die in einem Gebäude installiert sind, um eine witterungsunabhängige wählbare Raumtemperatur bereitzustellen.

Im Stand der Technik sind aus dem Heizungsbau zahlreiche Anordnungen und Steuerungsverfahren zur komfort- und effizienzorientierten Verteilung und Regelung einer Wärmeenergie durch ein hydraulisches Netz im Gebäude bekannt, wobei ähnliche Installationen in Gebäuden ebenso zur Verteilung und Regelung einer Klimatisierungsenergie bzw. einem Wärmeentzug aus Räumen bekannt sind.

Im Stand der Technik sind Verfahren zur Durchführung eines hydraulischen Abgleichs bekannt, in dem die Rücklauftemperatur an einem Wärmetauscher erfasst wird, und der Volumenstrom durch den Wärmetauscher in Abhängigkeit der Rücklauftemperatur gesteuert wird. In einer Alternative wird eine Temperaturdifferenz zwischen der Vorlauftemperatur und der Rücklauftemperatur ermittelt. Zwischen der ermittelten Temperaturdifferenz und einem Soll-Wert einer konstanten Temperaturdifferenz wird eine Regeldifferenz gebildet. Der Volumenstrom durch den Wärmetauscher wird anhand dieser Regeldifferenz gesteuert, um die Rücklauftemperatur an den Soll-Wert der konstanten Temperaturdifferenz, d.h. einer vorbestimmten, unveränderlichen Temperaturspreizung anzunähern.

Die Technik der zuvor genannten Patentanmeldung DE 10 2017 123 560 A1 beschreibt eine Einstellvorrichtung und ein Verfahren zur selbstregulierenden Einstellung eines Durchflusses in Verbraucherschleifen mit einem Wärmetauscher, die auf einer Berechnung einer anwendungsoptimierten Temperaturspreizung zwischen der Vorlauftemperatur und Rücklauftemperatur, also einer variablen Soll-Temperaturdifferenz in jeder Verbraucherschleife basiert. Die Einstellvorrichtung bildet dabei die maßgebliche Komponente eines Temperierungssystems, in dem das dementsprechende Verfahren umgesetzt wird, und das ein zugeordnetes Raumthermostat aufweist. Die Berechnung einer variablen Spreizung der Temperaturdifferenz dient dazu, in einer individuellen Installationsumgebung des Wärmetauschers einen optimalen Betriebspunkt selbstständig anzupassen. Der Einbezug der resultierenden Heizdauer gleicht Begebenheiten des Gebäudes, wie z.B. Stockwerk, Kellerlage oder Außenwandverhältnis sowie Begebenheiten der Installation aus, und ermöglicht es, eine schnellere Raumtemperierung innerhalb eines effizienten Bereichs selbstständig zu optimieren. Eine Mehrzahl entsprechender Einstellvorrichtungen führt ohne Erfordernis einer zentralen Steuerungseinheit eine bedarfsgerechte Verteilung der Teilströme in den Verbraucherschleifen aus.

Die vorliegende Erfindung beschäftigt sich mit einer Ermittlung einer hydraulischen minimalen Öffnungsposition eines Ventils, ab der ein Durchfluss durch eine dem Ventil zugeordnete Verbraucherschleife erfolgt. Das Einlernen eines solchen hydraulischen Schwellwerts des Ventils dient als eine Initialisierung bzw. als eine Kalibrierung der Einstellvorrichtung auf einen verwendeten Ventiltyp, oder auf einen veränderlichen Alterungszustand einer Dichtung des Ventils, wodurch eine Genauigkeit und eine Geschwindigkeit einer Regelung zur Einstellung des Ventils verbessert werden.

Im Allgemeinen weisen sogenannte Durchflussregelventile, die in Heizkreisen einer Heizungsinstallation wie einer Fußbodenheizung oder sonstigen Temperierungsanlagen wie Kühldecken oder dergleichen verwendet werden, eine Dichtung auf. Die Dichtung dichtet einen Durchfluss eines flüssigen Wärmeträgers in einer geschlossenen Position des Ventils ab, beispielsweise wenn kein Temperierungsbedarf durch die zugeordnete Verbraucherschleife und deren Wärmetauschern besteht. Die Dichtung kann an einem Ventilkörper bzw. einem Ventilteller angeordnet sein, der über einen Ventilstift verschoben wird. Die Dichtung besteht in der Regel aus einem elastischen Material wie z.B. Gummi. Wenn der Ventilteller von einem Ventilsitz abgehoben wird, nimmt innerhalb des entstehenden Ventilspalts eine Kompression der Dichtung ab, jedoch gibt die Dichtung noch keinen Durchfluss durch den Ventilspalt frei. Aufgrund der elastischen Materialeigenschaft besteht somit ein dichtungswirksamer Bereich entlang eines Stellwegs des Ventils. Ab einem hydraulischen Schwellwert, der wie nachfolgend ermittelt werden soll, erfolgt unter einem vor dem Ventil anliegenden hydraulischen Druck ein minimaler Durchfluss des Wärmeträgers. In einem anschließenden hydraulischen Bereich entlang des Stellwegs des Ventils nimmt ein beschränkter Durchfluss durch das Ventil zu.

Zur Bereitstellung einer energetisch effizienten Feinregulierung von Heizkreisen bzw. Verbraucherschleifen in einem Temperierungssystem kann der Regelungsbetrieb einer selbstregulierenden Einstellvorrichtung optimiert werden, wenn dieser auf einen Wert zurück greifen kann, der einer minimalen bzw. möglichst kleinen bekannten Öffnungsposition des Ventils zugeordnet ist.

Der entsprechende Schwellwert eines Stellwegs eines Ventils zwischen einem hydraulischen Bereich und einem dichtungswirksamen Bereich, in dem ein Durchfluss durch eine Ventildichtung annähernd unterbunden wird, ist individuell. Ein entsprechender Übergang liegt erwartungsgemäß innerhalb einer unteren Hälfte des Ventilstellwegs, ein absoluter Wert ist jedoch prinzipiell unbekannt, denn er hängt sowohl von einem beliebigen kompatiblen Ventiltyp als auch von einem Verschleiß oder einer Alterung der Dichtung ab.

Bei der obengenannten Technik ist eine Anordnung des Ventils und eines Temperatursensors für die Vorlauftemperatur vorzugsweise derart vorgesehen, dass das Ventil an einem Zulaufverteilerrohr, d.h. in Strömungsrichtung vor der zugeordneten Verbraucherschleife angebracht ist und der Temperatursensor für die Vorlauftemperatur an einer von dem Zulaufverteilerrohr wegführenden Leitungsstrecke, d.h. in Strömungsrichtung hinter dem Ventil in einem Anfangsbereich der Verbraucherschleife angebracht ist. Es ist keine Erfassung des Durchflusses an dem Ventil oder einer zugeordneten Leitung bereitgestellt. Eine Regelung trifft mittels eines Vergleichs von erfassten Temperaturen am Anfang und am Ende der Verbraucherschleife Rückschlüsse, ob ein Durchfluss in der Verbraucherschleife vorliegt.

Ein möglicher Lösungsansatz für diese Regelung könnte vorsehen, dass im Rahmen einer Initialisierung der Einstellvorrichtung, die durch einen geschulten Handwerker nach einer Montage und vor einer ersten Inbetriebnahme durchgeführt wird, der hydraulische Schwellwert des verwendeten Ventils eingelernt wird. Dabei öffnet die Einstellvorrichtung langsam das Ventil, ausgehend von der geschlossenen Position während die Temperaturdifferenz am Anfang und am Ende der Verbraucherschleife überwacht wird. Sobald die erfassten Temperaturen einen Durchfluss des Wärmeträgers erkennen lassen, wird auf dem entsprechenden Ventilstellwert der hydraulische Schwellwert festgelegt. Nach dem Abschluss des Initialisierungsvorgangs wird die Einstellvorrichtung von dem geschulten Handwerker zum Regelungsbetrieb in dem Temperierungssystem freigegeben.

Dieser Lösungsansatz hat jedoch verschiedene Nachteile. Die Initialisierung zum Einlernen der Schwellwerte der Ventile muss von einem Handwerker durchgeführt oder überwacht werden. Der Vorgang muss nach einer Montage an jeder Einstellvorrichtung von jedem Ventil eines Verteilerrohrs bzw. eines Heizkreisverteilers einzeln von dem Handwerker durchgeführt werden. Hierdurch entstehen ein entsprechender Aufwand und Kosten vor der Inbetriebnahme des Temperierungssystems.

Je genauer der Schwellwert ermittelt werden soll, desto langsamer muss die Geschwindigkeit beim Öffnen des Ventils sein, auch deshalb, da das thermische Ansprechverhalten eines geringen Durchflusses in der Verbraucherschleife auf die Temperaturerfassung mit einer Verzögerung einhergeht. Bei sorgfältiger Ausführung kann das Einlernen des hydraulischen Schwellwerts eines verwendeten Ventils einen Arbeitsaufwand des Handwerkers von etwa einer Stunde betragen.

Ferner müssen zu dem Zeitpunkt der Initialisierung alle Komponenten des Temperierungssystems betriebsbereit eingestellt sein und die Zufuhranschlüsse eines Energieträgers und des Stroms durch ein Versorgungsunternehmen bereits freigegeben sein. Ebenso sollte die Isolierung des Bauwerks abgeschlossen sein. Ansonsten ist separat zu einer Installation des Heizkreisverteilers in dem Bauwerk nochmals zu einem späteren Zeitpunkt der ersten Inbetriebnahme des Temperierungssystems eine gesonderte Handwerkerleistung erforderlich.

Es ist eine Aufgabe der Erfindung, eine Einstellvorrichtung und ein entsprechendes Verfahren zur selbstregulierenden Einstellung eines Durchflussregelventils zu schaffen, die eine alternative Ermittlung eines hydraulischen Schwellwerts des Durchflussregelventils bereitstellen.

Diese Aufgabe wird durch die kennzeichnenden Merkmale einer Einstellvorrichtung nach Anspruch 1 oder 2, und die kennzeichnenden Merkmale eines Verfahrens nach Anspruch 13 oder 14 gelöst.

Die Einstellvorrichtung zur selbstregulierenden Einstellung eines Durchflussregelventils zeichnet sich insbesondere dadurch aus, dass sie dazu eingerichtet ist, eine hydraulische minimale Öffnungsposition des Durchflussregelventils, bei der ein minimaler Durchfluss erfassbar ist, entlang eines Stellwegs zu ermitteln; und die Einstellvorrichtung einen Durchfluss durch das Durchflussregelventil basierend auf einer Temperaturänderung des Wärmeträgers in der Verbraucherschleife erfasst; wobei die Ermittlung der hydraulischen minimalen Öffnungsposition Iterationen von verschiedenen Öffnungspositionen entlang des Stellwegs des Durchflussregelventils umfasst; jede Iteration einer Öffnungsposition des Durchflussregelventils wenigstens eine Erfassung des Durchflusses durch das Durchflussregelventil umfasst; und sich die Ermittlung der hydraulischen minimalen Öffnungsposition über mehrere externe Temperierungsanforderungen an die Verbraucherschleife erstreckt, und fehlende Iterationen der Ermittlung, die nach Deaktivierungen der Einstellvorrichtung zwischen den Temperierungsanforderungen noch ausstehen, bei erneuten Aktivierungen der Einstellvorrichtung fortgeführt werden.

Das entsprechende erfindungsgemäße Verfahren zur selbstregulierenden Einstellung eines Durchflusses zeichnet sich insbesondere aus durch die Schritte: Ermitteln einer hydraulischen minimalen Öffnungsposition des Durchflussregelventils, bei der ein minimaler Durchfluss erfassbar ist, entlang eines Stellwegs; mittels Erfassen eines Durchflusses durch das Durchflussregelventil basierend auf einer Temperaturänderung des Wärmeträgers in der Verbraucherschleife; wobei die Ermittlung der hydraulischen minimalen Öffnungsposition Iterationen von verschiedenen Öffnungspositionen entlang des Stellwegs des Durchflussregelventils umfasst; jede Iteration einer Öffnungsposition des Durchflussregelventils wenigstens eine Erfassung des Durchflusses durch das Durchflussregelventil umfasst; und sich die Ermittlung der hydraulischen minimalen Öffnungsposition über mehrere externe Temperierungsanforderungen an die Verbraucherschleife erstreckt, und fehlende Iterationen der Ermittlung, die nach Deaktivierungen der Einstellvorrichtung zwischen den Temperierungsanforderungen noch ausstehen, bei erneuten Aktivierungen der Einstellvorrichtung fortgeführt werden.

Die Erfindung sieht erstmals eine selbstständige Ermittlung eines hydraulischen Schwellwerts des Durchflussregelventils durch eine Einstellvorrichtung vor, die nach Inbetriebnahme des Temperierungssystems über den Temperierungsbetrieb hinweg zeitlich verteilt erfolgt.

In ihrer allgemeinsten Form liegt der Erfindung der Gedanke zugrunde, über mehrere Temperierungsanforderungen hinweg, die zum Öffnen eines Durchflusses durch eine Verbraucherschleife erfolgen, eine sukzessive Approximation an den zu ermittelnden Schwellwert selbsttätig durch die Einstellvorrichtung im laufenden Betrieb durchzuführen.

Eine externe Temperierungsanforderung im Sinne dieser Offenbarung erfolgt beispielsweise durch einen Thermostat, der ein Signal, z.B. ein binäres Einschaltsignal (EIN/AUS) zur Aktivierung der Einstellvorrichtung ausgibt. Beispielsweise stellt ein Raumthermostat eine Heizanforderung an eine Fußbodenheizung und aktiviert an einem Heizkreisverteiler die Einstellvorrichtung eines Durchflussregelventils, das der Fußbodenheizung in dem betreffenden Raum zugeordnet ist. Das Durchflussregelventil öffnet die entsprechende Verbraucherschleife und stellt einen Durchfluss ein, sodass die Raumtemperatur an eine Soll-Temperatur herangeführt wird, die von einem Nutzer an dem Raumthermostat eingestellt wurde.

Alternativ zu einem Thermostat kann eine Aktivierung der Einstellvorrichtung ebenso durch ein sonstiges Eingabemittel wie einen Schalter erfolgen, durch den der Nutzer eine Temperierungsanforderung für die Einstellvorrichtung direkt vorgeben kann.

Die Erfindung hat den Vorteil, dass die Einstellvorrichtung den hydraulischen Schwellwert des Durchflussregelventils nach einer Inbetriebnahme des Temperierungssystems selbstständig einlernen kann. Somit entfällt ein Arbeitsaufwand eines Handwerkers.

Die Ermittlung des hydraulischen Schwellwerts erfolgt zeitlich verteilt über mehrere Temperierungsanforderungen hinweg. Es entfällt eine Initialisierung bzw. Kalibrierung der Einstellvorrichtung vor einer ersten Inbetriebnahme, zu der alle übrigen Voraussetzungen des Temperierungssystems betriebsbereit sichergestellt sein müssen. Eine Installation der Einstellvorrichtung und eine Inbetriebnahme des Temperierungssystems werden zeitlich entkoppelt. Somit ist es für die erfindungsgemäße Ermittlung des hydraulischen Schwellwerts unerheblich, ob die Einstellvorrichtung beispielsweise bei einer Fertigstellung eines Gebäudes im Sommer installiert wurde, und erst im Laufe einer Heizperiode im Herbst erstmals in Betrieb genommen wird.

Die Erfindung hat ferner den Vorteil, dass die Ermittlung des hydraulischen Schwellwerts dazu geeignet ist, routinemäßig wiederholt zu werden. Dadurch wird es der Einstellvorrichtung prinzipiell ermöglicht, sich auf Veränderungen des hydraulischen Schwellwerts, wie durch einen Austausch eines Ventils, einen Verschleiß oder eine Alterung einer Dichtung selbstständig anzupassen.

Vorteilhafte Weiterbildungen der vorliegenden Erfindung sind Gegenstand der abhängigen Ansprüche.

Gemäß einem Aspekt der Erfindung kann die erste Iteration an einer hydraulischen Öffnungsposition beginnen, bei der ein Durchfluss durch das Durchflussregelventil zu erwarten ist; und die Einstellvorrichtung kann eine Öffnungsposition des Durchflussregelventils für eine nachfolgende Iteration in Richtung zu einer geschlossenen Position des Durchflussregelventils versetzt einstellen, wenn ein Durchfluss durch das Durchflussregelventil erfasst wird. Somit wird eine Inbetriebnahme des Temperierungssystems zunächst nicht durch die Funktionalität zur Ermittlung der hydraulischen minimalen Öffnungsposition beeinträchtigt, d.h. insbesondere ein Durchfluss für eine erste Heizanforderung nicht durch die erste Iteration einer Öffnungsposition des Durchflussregelventils unterbunden.

Gemäß einem Aspekt der Erfindung kann die Einstellvorrichtung eine Öffnungsposition des Durchflussregelventils für eine nachfolgende Iteration entgegengesetzt der Richtung zu der geschlossenen Position des Durchflussregelventils versetzt einstellen, wenn kein Durchfluss durch das Durchflussregelventil erfasst wird. Durch eine beidseitige iterative Annäherung kann die hydraulische minimale Öffnungsposition relativ genau ermittelt werden.

Gemäß einem Aspekt der Erfindung kann die Einstellvorrichtung eine Öffnungsposition des Durchflussregelventils bei einer nachfolgenden Iteration um eine Strecke auf dem Stellweg versetzen, die der Hälfte des Betrags der versetzten Strecke bei der vorhergehenden Iteration entspricht. Bei dieser iterativen Annäherung werden zunächst große Strecken des Stellwegs zurückgelegt, welche in die Ermittlung einfließen. Dadurch kann die hydraulische minimale Öffnungsposition in Bezug auf die Anzahl der Iterationen von Öffnungspositionen relativ schnell ermittelt werden.

Gemäß einem Aspekt der Erfindung kann die Einstellvorrichtung die hydraulische minimale Öffnungsposition innerhalb einer vorbestimmten Anzahl von Iterationen verschiedener Öffnungspositionen des Durchflussregelventils ermitteln. Somit kann die Länge der Ermittlung in Abhängigkeit einer vorbestimmten Auflösung bzw. Genauigkeit des hydraulischen Schwellwerts effektiv und in einfacher Weise begrenzt werden.

Gemäß einem Aspekt der Erfindung kann, wenn kein Durchfluss durch das Durchflussregelventil erfasst wird, eine Iteration der entsprechenden Öffnungsposition noch eine Erfassung des Durchflusses an einer höheren Öffnungsposition des Durchflussregelventils umfassen. Somit kann über einen Vergleich verifiziert werden, ob tatsächlich infolge eines im Wesentlichen geschlossenen Durchflussquerschnitts kein Durchfluss erfasst wurde. Insbesondere kann ausgeschlossen werden, dass die Erfassung von keinem Durchfluss nicht Folge einer anderen möglichen Ursache ist, wie eine Fehlinterpretation aus einer Beeinflussung der erfassten Temperaturänderung oder einer Störung der Pumpe.

Gemäß einem Aspekt der Erfindung kann jede Iteration eine vorbestimmte Anzahl von Erfassungen des Durchflusses durch das Durchflussregelventil an einer Öffnungsposition des Durchflussregelventils umfassen. Somit kann das Ergebnis, ob ein Durchfluss vorliegt, durch mehrere aufeinanderfolgende Schließungen und erneute Einstellungen der betreffenden Öffnungsposition und Erfassungen des Durchflusses mehrfach überprüft und sichergestellt werden, bevor die Ermittlung zu einer nachfolgenden Iteration an einer weiteren Öffnungsposition fortschreitet. Im dem Fall, in dem kein Durchfluss an einer Öffnungsposition vorliegt, kann die Iteration beispielsweise die doppelte Anzahl von Erfassungen des Durchflusses umfassen, d.h. abwechselnd folgt auf jede Erfassung, bei der kein Durchfluss vorliegt, jeweils eine Erfassung zur Verifikation, dass an einer höheren Öffnungsposition ein Durchfluss seitens des Systems bereitgestellt bzw. mittels der Temperaturmessung erfassbar ist.

Gemäß einem Aspekt der Erfindung kann zwischen jeder Iteration einer Öffnungsposition, zwischen jeder Erfassung des Durchflusses innerhalb einer Iteration einer Öffnungsposition und/oder zwischen einer Aktivierung und einer Fortführung von ausstehenden Iterationen der Ermittlung, zunächst eine vorbestimmte Sperrdauer durchlaufen werden, für die das Durchflussregelventil geschlossen wird und/oder in der keine Temperatur erfasst wird. Somit wird eine thermische Trägheit von Komponenten, Knotenpunkten und Kreisläufen in dem Temperierungssystem berücksichtigt, die ein Ansprechverhalten einer Temperaturmessung beeinflussen und die Erfassung der Temperaturänderung in der Verbraucherschleife zunächst beeinträchtigen oder verfälschen können.

Gemäß einem Aspekt der Erfindung kann das Fortführen einer unterbrochenen Iteration der Ermittlung der hydraulischen minimalen Öffnungsposition vorübergehend für eine Temperierungsanforderung ausgesetzt werden; wenn an der Öffnungsposition der unterbrochenen Iteration zuvor kein Durchfluss durch das Durchflussregelventil erfasst wurde. Somit wird die Funktionalität zur Ermittlung der hydraulischen minimalen Öffnungsposition vorübergehend einem angeforderten Temperierungsbedarf untergeordnet, um eine Beeinträchtigung eines Nutzerkomforts während der Ermittlung möglichst gering zu halten.

Gemäß einem Aspekt der Erfindung kann die Einstellvorrichtung die Ermittlung der hydraulischen minimalen Öffnungsposition durchführen, wenn sie von einer Stromzufuhr getrennt wurde und/oder wenn eine Demontage in Bezug auf das Durchflussregelventil mittels des Stellglieds erfasst wurde. Somit kann die Einstellvorrichtung selbstständig eine Initialisierung vornehmen nachdem möglicherweise Veränderungen am Temperierungssystem vorgenommen wurden.

Gemäß einem Aspekt der Erfindung kann die Einstellvorrichtung die Ermittlung der hydraulischen minimalen Öffnungsposition durchführen, wenn ein vorbestimmtes Wiederholungsintervall abläuft. Somit kann die Einstellvorrichtung selbstständig eine wiederkehrende Kalibrierung auf einen veränderlichen Ventilzustand vornehmen.

Die Erfindung sowie eine geeignete Technik zur Umsetzung der Erfindung werden anhand der Figurenbeschreibung mit Bezug auf die begleitende Zeichnung besser verständlich, wobei dieselben Bezugszeichen für dieselben Gegenstände Verwendung finden, in denen:
- Fig. 1: ein Diagramm zeigt, in dem eine Kennlinie eines Durchflusswerts und eines Ventilstellwegs von einem Durchflussregelventil an den Achsen aufgetragen sind;
- Fig. 2: ein Diagramm zeigt, in dem eine Streuung des hydraulischen Schwellwerts bezüglich eines minimalen Durchflusses an verschiedenen Durchflussregelventilen und ein ermittelter hydraulischer Schwellwert an einem bestimmten Durchflussregelventil in Bezug auf einen Ventilstellweg dargestellt sind;
- Fig. 3: ein Diagramm zeigt, in dem Iterationen verschiedener Öffnungspositionen entlang eines Ventilstellwegs aus einer Ermittlung der minimalen hydraulischen Öffnungsposition gemäß einer Ausführungsform der Erfindung dargestellt sind;
- Fig. 4: ein Blockschaltbild zeigt, das eine theoretische Auflösung des ermittelten Ergebnisses nach einer vorbestimmten Anzahl von Iterationen erläutert;
- Fig. 5: eine Querschnittsansicht durch eine Einstellvorrichtung zeigt;
- Fig. 6: eine Darstellung eines Temperierungssystems mit Einstellvorrichtungen in einer Verteilervorrichtung, Thermostaten und weiteren Systemkomponenten zeigt; und
- Fig. 7: ein Blockschaltbild zeigt, das die Systemkomponenten zur Selbstregulierung darstellt.

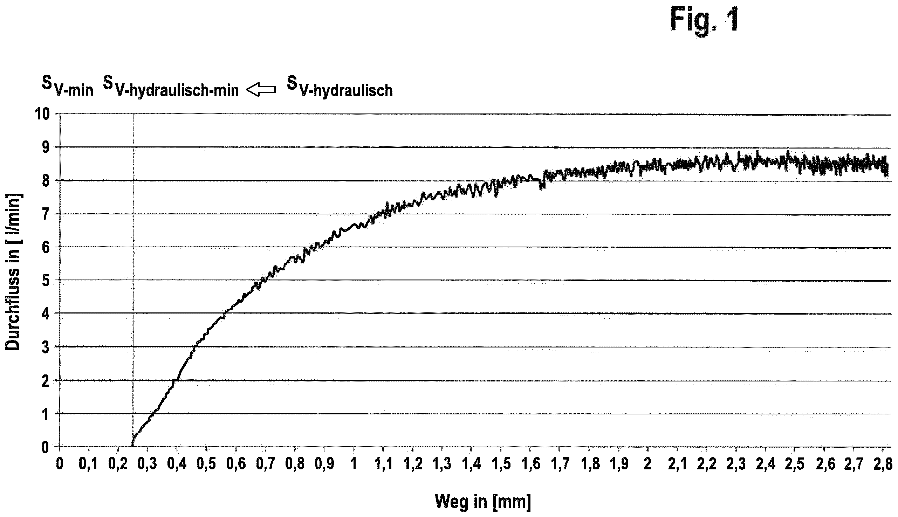

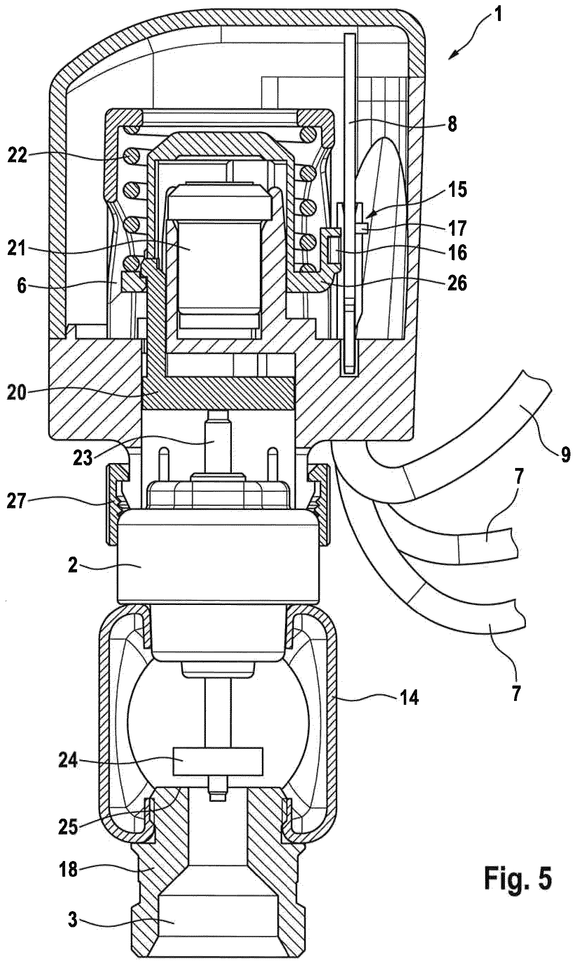

Nachstehend wird eine beispielhafte Ausführungsform der erfindungsgemäßen Funktionalität zur Ermittlung einer hydraulischen minimalen Öffnungsposition eines Durchflussregelventils 2 in Bezug auf die Figuren 1 bis 4 beschrieben, die an einer Einstellvorrichtung 1 in einem Temperierungssystem 10, die in den Figuren 5 bis 7 dargestellt sind, realisiert wird.

Die hydraulische minimale Öffnungsposition ist im Sinne dieser Offenbarung eine Öffnungsposition, bei der ein für den Regelungsbetrieb festzulegender, minimaler Durchfluss vorliegt. Allerdings ist es nicht zwingend erforderlich, dass bei dieser Öffnungsposition der kleinste absolute Durchfluss vorliegt, der einstellbar bzw. realisierbar ist. Relevant ist, dass ein Durchfluss sichergestellt ist, und dass dieser im Rahmen einer Annäherung möglichst gering ausfällt. Einerseits ist die Annäherung an den kleinsten absoluten Durchfluss durch die indirekte Messmethodik begrenzt, die vorrichtungsseitig keine Strömungsmessung, sondern eine Temperaturmessung bereitstellt. Andererseits ist für den praktischen Regelungsbetrieb die Annäherung an den kleinsten absoluten Durchfluss bis zu einer verbleibenden Toleranz ausreichend und kann danach zur Begrenzung eines Aufwands vorzugsweise beendet werden. Relevant ist, dass die verbleibende Toleranz innerhalb eines hydraulischen Bereichs und nicht innerhalb eines dichtungswirksamen Bereichs des Ventilstellwegs verbleibt, sodass ein Durchfluss an dem angenäherten Schwellwert der hydraulischen minimalen Öffnungsposition sichergestellt ist. Der ermittelte Schwellwert wird anschließend als die hydraulische minimale Öffnungsposition in der Einstellvorrichtung 1 für den Regelungsbetrieb verwendet.

Der Stellweg des Durchflussregelventils 2 ist im Sinne dieser Offenbarung eine absolute Strecke des Ventilhubs, d.h. ein Stellweg zwischen einer vollständig geschlossenen Position Sv ₘᵢₙ, in der ein Ventilkörper bzw. Ventilteller 24 unter einer Vorspannung auf einem Ventilsitz 25 aufliegt, und einer vollständig geöffneten Position, in welcher ein Durchflussquerschnitt durch den Ventilteller 24 gegen eine Vorspannung vollständig oder soweit wie möglich einstellbar freigegeben ist. Ferner stellt im Sinne dieser Offenbarung die vollständig geschlossene Position Sv ₘᵢₙ des Durchflussregelventils 2 eine Anordnung dar, in der ein Stellglied 6 der Einstellvorrichtung 1 gerade mit einem Ventilstift 23 in Kontakt gelangt, d.h. ein Punkt bevor ein Ventilstellweg beginnt.

Eine externe Temperierungsanforderung, die zu einem Aktivieren und später zu einem Deaktivieren der Einstellvorrichtung 1 an einem Durchflussregelventil 2 in einer Verbraucherschleife 3 führt, ist im Sinne dieser Offenbarung ein Bedarf an einer vorübergehenden Temperierungsleistung zur Einhaltung einer gewünschten Temperatur, insbesondere Raumtemperatur. Ein solcher Bedarf wird durch einen Nutzer oder einen Thermostat 12 festgestellt und mittels eines Signals ausgegeben, um die Einstellvorrichtung 1 zu aktivieren. Ein entsprechendes Signal ist z.B. eine Steuerspannung, die während des Bedarfs zur Temperierung einen hohen Pegel aufweist, und nach dem Bedarf einen niedrigen Pegel bzw. einen Nullpegel aufweist.

Im Falle eines Thermostats 12 erfolgt eine Temperierungsanforderung durch den Thermostat 12 nachdem ein Nutzer eine Soll-Temperatur vorgibt oder ändert, die von einer Ist-Temperatur abweicht. Sehr viel häufiger, beispielsweise in Form einer regelmäßigen Taktung, erfolgen Temperierungsanforderungen durch einen Thermostat 12 während der Aufrechterhaltung einer Ist-Temperatur, die bereits an die Soll-Temperatur herangeführt wurde. Die Aufrechterhaltung des Zustands erfolgt in der Regel innerhalb einer Temperaturschwankung um die Soll-Temperatur, die über eine intermittierende Zufuhr der Temperierungsleistung modelliert wird. Hierzu taktet ein Thermostat 12 Durchflusszeiten des Wärmeträgers durch die entsprechende Verbraucherschleife 3 bzw. die Wärmetauscher 30, indem die Einstellvorrichtung 1 phasenweise aktiviert und deaktiviert wird. Die Dauer einer solchen Taktung hängt von der Bauart (z.B. Bimetall bzw. analog oder digital) oder dem Typ eines Thermostats 12 ab. Kurz getaktete Typen von Thermostaten 12 können zur Aufrechterhaltung einer Temperatur Aktivierungsdauern für Temperierungsanforderungen und Deaktivierungsdauern zwischen Temperierungsanforderungen vorgeben, die in einem Bereich von 15 oder 10 Minuten oder ggf. noch darunter liegen können. Lang getaktete Typen von Thermostaten 12 können entsprechende Dauern im Bereich von einigen wenigen Stunden, z.B. 4 Stunden vorgeben.

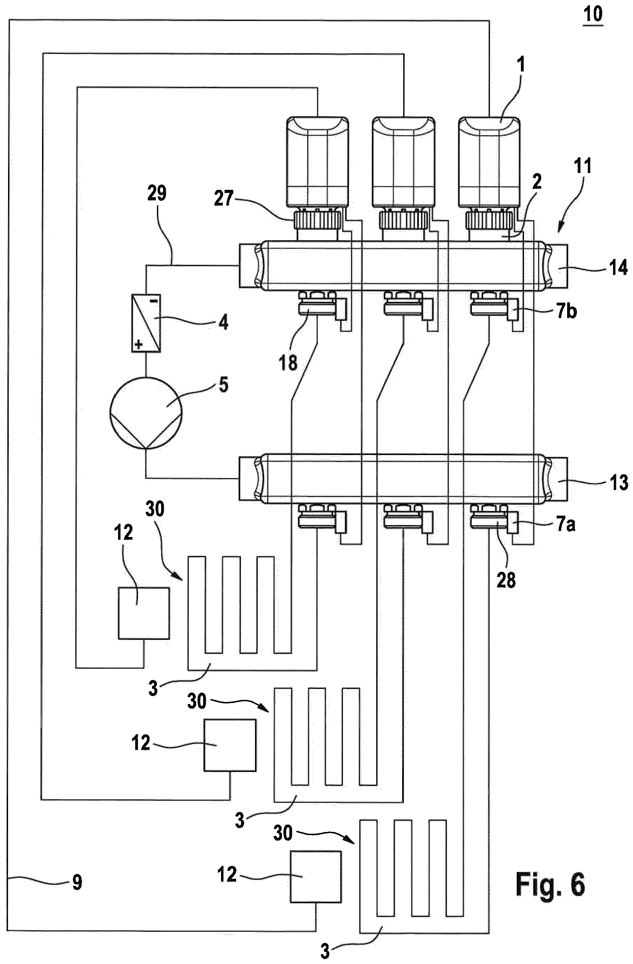

Wie später erläutert, ist jedes Durchflussregelventil 2 vor bzw. am Anfang von jeder Verbraucherschleife 3, die in Fig. 6 dargestellt ist, angeordnet und regelt den Durchfluss eines flüssigen Wärmeträgers durch die Verbraucherschleife 3. Die Öffnungsposition von jedem Durchflussregelventil 2 wird jeweils durch eine autonom regelnde Einstellvorrichtung 1 dezentral, d.h. insbesondere nicht von einer zentralen Steuerungseinheit des Temperierungssystems 10 aus, anhand von einem Vergleich der Temperaturen des durchfließenden Wärmeträgers am Anfang und am Ende der Verbraucherschleife 3 eingestellt. Die Einstellvorrichtung 1 ist zu einer Montage auf einem genormten Ventiltyp, der vorzugsweise an Verteilerrohren von Heizkreisverteilern eingesetzt wird, ausgelegt.

Die Erfassung einer Temperaturänderung bedeutet eine zeitliche Erfassung eines Gradienten der Temperaturänderung des Wärmeträgers an einer Position eines Temperaturerfassungsmittels 7 an der Verbraucherschleife 3, vorzugsweise des Temperaturerfassungsmittels 7 am Anfang der Verbraucherschleife 3 hinter dem Durchflussregelventil 2. In einem flüchtigen Speicher bzw. RAM eines Mikrocomputers bzw. Berechnungsmittels 8 der Einstellvorrichtung 1 wird z.B. über eine Minute eine Temperaturänderung erfasst. Beispielsweise wird über mehrere zehn Sekunden oder eine Minute lang, ein Gradient der erfassten Temperaturänderung gebildet und mit einem vorbestimmten Gradienten, z.B. ± 1 oder ±2 K/min verglichen.

Wenn eine signifikante Temperaturänderung vorliegt, d.h. ein erfasster Gradient größer als der vorbestimmte Gradient ist, muss diese Temperaturänderung dadurch entstanden sein, dass ein in der Verbraucherschleife 3 stehendes Volumen des flüssigen Wärmeträgers an der Position des Temperaturerfassungsmittels 7 durch ein von der Temperierungsquelle 4 nachströmendes Volumen des Wärmeträgers ersetzt wurde. Demzufolge liegt bei der betreffenden Öffnungsposition ein Durchfluss an dem Durchflussregelventil 2 vor.

Wenn keine Temperaturänderung erfasst wird, also der Gradient im Wesentlichen 0 K/min beträgt, steht ein Volumen des flüssigen Wärmeträgers an der Position des Temperaturerfassungsmittels 7 offensichtlich weiterhin und wurde nicht durch ein nachströmendes Volumen des Wärmeträgers ersetzt. Demzufolge liegt bei der betreffenden Öffnungsposition kein Durchfluss an dem Durchflussregelventil 2 vor.

Ferner kann ein Übergangsbereich des Gradienten definiert sein, in dem die Erfassung einer geringfügigen Temperaturänderung keine sichere Feststellung über einen Durchfluss zulässt. Wenn der erfasste Gradient beispielsweise Werte in einem Bereich von mehreren Zehntel Kelvin pro Minute aufweist, könnte die Temperaturänderung auch durch sonstige äußere Umstände, wie ein Abkühlen oder einen Ausgleich zwischen Wärmekapazitäten von flüssigkeitsführenden Komponenten im Temperierungssystem 10 verursacht worden sein. In diesem Fall wird das Ergebnis der Erfassung verworfen.

Die Erfinder haben eine Vielzahl der am Markt verfügbaren Produkte von Durchflussregelventilen 2, die hinsichtlich genormter Abmessungen zu der Einstellvorrichtung 1 kompatibel sind, in Bezug auf einen Übergang zwischen einem dichtungswirksamen Bereich und einen hydraulischen Bereich im Verhältnis zu dem Stellweg des Ventils untersucht und relevante Parameter im Hinblick auf die erfindungsgemäße Funktionalität der Einstellvorrichtung 1 analysiert.

So zeigt Fig. 1 ein Diagramm, in dem an einer senkrechten Achse eine Durchflussrate eines Durchflussregelventils 2 zu einem Ventilstellweg angetragen ist. Bei einer in Fig. 1 dargestellten beispielgebenden Kennlinie eines untersuchten Durchflussregelventils 2 ist abzulesen, dass innerhalb eines Bereichs des Stellwegs von 0 bis 0,25 mm kein Durchfluss des Wärmeträgers erfolgt. In einem Bereich von 0,25 mm bis etwa 2 mm steigt der Durchfluss zunächst bis etwa 0,7 mm annähernd linear und darüber abflachend an. Über eine Öffnung des Stellwegs von etwa 2,0 mm hinaus stagniert der Durchfluss auf einem Maximum.

Die verschiedenen Produkte kommerziell erhältlicher Durchflussregelventile 2, die zu der Einstellvorrichtung 1 kompatibel sind, unterscheiden sich hinsichtlich der dargestellten Kennlinie, sie stehen jedoch bezüglich des Verlaufs der Kennlinie in einer Korrelation. Aus der Korrelation wurden für die Funktionalität der Ermittlung eines hydraulischen Schwellwerts eines Ventils, welcher der hydraulischen minimalen Öffnungsposition zugeordnet ist, zutreffende Bereiche entlang des Stellwegs eines Durchflussregelventils 2 definiert.

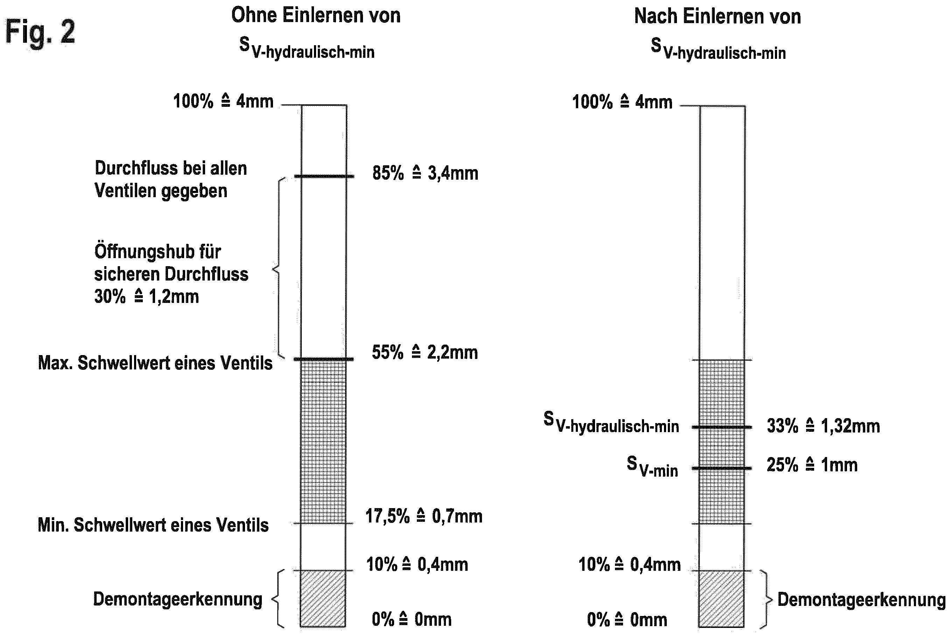

Fig. 2 zeigt einen Vergleich zwischen einem Regelbetrieb bevor ein Schwellwert der hydraulischen minimalen Öffnungsposition ermittelt wurde und einem Regelungsbetrieb nachdem der Schwellwert der hydraulischen minimalen Öffnungsposition ermittelt wurde.

Zunächst wird anhand der Darstellung auf der linken Seite eine Einteilung des Stellwegs erläutert, auf welche die Einstellvorrichtung 1 zurückgreift, wenn die hydraulische minimale Öffnungsposition noch nicht abschließend ermittelt ist. Am unteren Ende des Stellwegs gelangt das Stellglied 6 der Einstellvorrichtung 1 mit dem Durchflussregelventil 2 in Kontakt. In diesem Bereich erfasst die Einstellvorrichtung 1, dass sie mit einem Durchflussregelventil 2 gekoppelt ist bzw. ein betriebsfähiger Montagezustand der Einstellvorrichtung 1 vorliegt. Darüber folgt mit etwas Abstand ein Bereich, in dem der hydraulische Schwellwert eines Ventils, welcher der hydraulischen minimalen Öffnungsposition zugeordnet ist, bei der Untersuchung verschiedener Produkte von genormten, kompatiblen Durchflussregelventilen aufgefunden wurde. Die Streuung der Schwellwerte der untersuchten Ventile ergibt einen Bereich, in dem die Einstellvorrichtung 1 die zu ermittelnde hydraulische minimale Öffnungsposition erwartungsgemäß entlang des Stellwegs auffindet. Darüber ist ein offener Bereich definiert, in dem basierend auf der Untersuchung erwartungsgemäß eine wesentliche Bandbreite von hydraulisch begrenzten Öffnungspositionen S_{V-hydraulisch} einstellbar ist. Darüber liegt ein oberer Bereich des Stellwegs, in dem das Durchflussregelventil 2 im Wesentlichen ungedrosselt ist, also ein kaum begrenzter oder nicht begrenzter Durchfluss erfolgt.

Die Darstellung auf der rechten Seite zeigt eine Einteilung des Stellwegs, auf welche die Einstellvorrichtung 1 zurückgreift, wenn der Schwellwert der hydraulischen minimalen Öffnungsposition ermittelt wurde. Durch den ermittelten Schwellwert steht fest, wie weit sich der dichtungswirksame Bereich von der vollständig geschlossenen Position Sv-min ausgehend über den Stellweg erstreckt. Diese Erkenntnis ermöglicht es der Regelung, eine Feinregulierung eines kleinen Durchflusses bis in einen kritischen Bereich eines Ventilspalts hinein einzustellen. Ferner ist festgelegt, dass sich ab dem Schwellwert der hydraulischen minimalen Öffnungsposition S_{V-hydraulisch-min} der Bereich erstreckt, in dem die wesentliche Bandbreite von hydraulisch begrenzten Öffnungspositionen S_{V-hydraulisch} einstellbar ist. Darüber ist festgelegt, dass in dem verbleibenden oberen Bereich des Stellwegs eine im Wesentlichen offene Öffnungsposition einstellbar ist.

An der vollständig geschlossenen Position Sv-min ist ein Stellglied 6 der Einstellvorrichtung 1 kraftlos mit dem Ventilstift 23 gekoppelt. In einer darüber liegenden Öffnungsposition wird der Ventilteller 24 von dem Ventilsitz 25 gegen eine Vorspannung abgehoben, allerdings versperrt noch eine Dichtung einen Ventilspalt. In dem als dichtungswirksam definierten Bereich ist also anzunehmen, dass eine Kompression der Dichtung am Ventilspalt abgenommen oder sich entspannt hat, jedoch im Wesentlichen noch keine Öffnung am Ventilspalt freigegeben ist, die unter dem anliegenden Förderdruck einen Durchfluss des flüssigen Wärmeträgers zulässt. In dem Bereich der hydraulisch begrenzten Öffnungspositionen S_{V-hydraulisch} wurde im Rahmen der Ermittlung sichergestellt, dass ein Durchfluss erfolgt, wobei dieser entlang des darüber liegenden Stellwegs zunimmt.

Ein absoluter Wert der hydraulischen minimalen Öffnungsposition S_{V-hydraulisch-min} variiert nicht nur in Abhängigkeit des Ventils, sondern auch durch eine Alterung sowie einen Verschleiß der Dichtung. Die Wertebereiche des Stellwegs in der linken Darstellung, die aus Korrelationen der Werte in den durchgeführten Untersuchungen verschiedener verfügbarer Durchflussregelventile 2 basieren, können vorab in einem Speicher der Einstellvorrichtung 1 hinterlegt sein. Die Werte sind derart gewählt, dass bei einer beliebigen Auswahl eines kompatiblen, genormten Durchflussregelventils 2 die vorab definierte Eigenschaft einer wirksamen Dichtung oder einer hydraulischen Begrenzung sicher oder zumindest mit hoher Wahrscheinlichkeit zutrifft.

In dem dichtungswirksamen Bereich des Stellwegs erfolgt kein Durchfluss durch die Verbraucherschleife 3. Infolgedessen kann bei einer Regelungslogik, die nicht auf einer tatsächlichen Durchflussmessung, sondern auf dem Temperaturvergleich eines vermeintlichen Durchflusses basiert, eine Störung auftreten. Die Regelungslogik der Einstellvorrichtung 1 würde in eine regelungstechnische Sackgasse gelangen, bei welcher der Durchfluss immer weiter gedrosselt wird, während die erfasste Temperaturdifferenz aufgrund der Ursache eines mangelnden Durchflusses unverändert bleibt. Durch eine weitere Funktionalität der Einstellvorrichtung 1, die Gegenstand einer zeitgleichen Patentanmeldung ist, und die sich an einem hydraulischen Schwellwert, vorzugsweise an dem gemäß dieser Offenbarung ermittelten hydraulischen minimalen Öffnungsposition S_{V-hydraulisch-min} orientiert, eine solche Fehlfunktion unterbunden werden bzw. Ursachen für eine regelungstechnische Sackgasse ausgeschlossen werden.

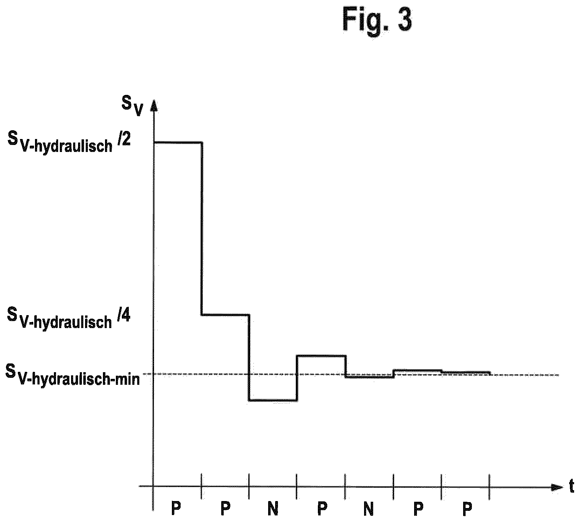

Fig. 3 zeigt auf einer vertikalen Achse einen Stellweg in Bezug auf eine gesamte bewegbare Strecke Sv eines Durchflussregelventils 2, an dem die Einstellvorrichtung 1 die Ermittlung der hydraulischen minimalen Öffnungsposition S_{V-hydraulisch-min} durchführt. Auf einer horizontalen Zeitachse sind positive Ergebnisse p und negative Ergebnisse n in Bezug auf eine Erfassung eines Durchflusses aufgetragen.

Nachfolgend wird die Ermittlung der hydraulischen minimalen Öffnungsposition S_{V-hydraulisch-min} in einem Verlauf von Iterationen in Fig. 3 beschrieben. Die Einstellvorrichtung 1 führt die Ermittlung auf der unteren Hälfte des Stellwegs durch, in welcher die hydraulische minimale Öffnungsposition S_{V-hydraulisch-min} erwartungsgemäß liegt. Zu Beginn der Ermittlung stellt die Einstellvorrichtung 1 der vorliegenden Ausführungsform in einer ersten Iteration eine Öffnungsposition des Durchflussregelventils 2 ein, die der Hälfte S_{V-hydraulisch}/2 der gesamten Strecke des Stellwegs Sv zugeordnet ist.

Danach wird eine nicht dargestellte Sperrdauer von wenigen Minuten, z.B. 5 min, durchlaufen, so dass eine thermische Trägheit, welche das Ansprechverhalten der Temperaturmessung beeinflusst, abgewartet wird. Danach wird gemessen, ob sich eine Temperatur des Wärmeträgers am Anfang oder am Ende der Verbraucherschleife 3 signifikant ändert oder auch nicht. Wenn eine Temperaturänderung gemessen wird, die einen vorbestimmten Gradienten, z.B. ±1 oder ±2 K/min überschreitet, wird angenommen, dass der flüssige Wärmeträger in der Verbraucherschleife 3 im Bereich des Temperaturerfassungsmittels 7 nicht ruht. Es ist vielmehr anzunehmen, dass ein Teil des Wärmeträgers, der von der Temperierungsquelle 4 kommt, nun das Durchflussregelventil 2 passiert hat und in die Verbraucherschleife 3 fließt, also ein Durchfluss vorliegt, und es wird ein positives Ergebnis p der Erfassung eines Durchflusses für die erste Iteration festgelegt.

Nach einem positiven Ergebnis p stellt die Einstellvorrichtung 1 in einer zweiten Iteration eine Öffnungsposition des Durchflussregelventils 2 ein, die einem Viertel S_{V-hydraulisch}/4 der gesamten Strecke des Stellwegs Sv zugeordnet ist. Danach wiederholen sich die Vorgänge aus der ersten Iteration in Bezug auf das Durchlaufen der Sperrdauer und die Temperaturmessung zur Erfassung eines Durchflusses, die wiederum zu einem positiven Ergebnis p führt.

Nach dem positiven Ergebnis p stellt die Einstellvorrichtung 1 in der dritten Iteration eine Öffnungsposition des Durchflussregelventils 2 ein, die einem Achtel S_{V-hydraulisch}/8 der gesamten Strecke des Stellwegs Sv zugeordnet ist. Danach wiederholen sich die Vorgänge in Bezug auf das Durchlaufen der Sperrdauer und die Temperaturmessung zur Erfassung eines Durchflusses. In der dritten Iteration wird keine signifikante Temperaturänderung gemessen. Um auszuschließen, dass der fehlende Durchfluss bzw. die fehlende Temperaturänderung nicht die Folge einer Ursache seitens des Temperierungssystems 10 ist, wie z.B. eine Abschaltung der Pumpe 5 oder eine Nachtabsenkung der Vorlauftemperatur, führt die Einstellvorrichtung 1 innerhalb der gleichen Iteration eine Vergleichsmessung durch. Hierzu öffnet die Einstellvorrichtung 1 vorübergehend das Durchflussregelventil 2 auf eine hydraulische Öffnungsposition, bei der ein Durchfluss sichergestellt ist, beispielsweise auf eine Öffnungsposition der vorherigen Iterationen mit einem positiven Ergebnis p ein. Danach wartet die Einstellvorrichtung 1 die Sperrdauer ab, und führt anschließend eine zweite Erfassung zur Verifikation durch. Wenn bei der Vergleichsmessung ein Durchfluss erfasst wird, bedeutet das, dass kein Fehler seitens des Systems vorliegt. Andererseits bedeutet das zugleich, dass ein fehlender Durchfluss in der ersten Erfassung die Folge eines abgedichteten Durchflussquerschnitts an der eingestellten Öffnungsposition der dritten Iteration war. Demnach wird ein negatives Ergebnis n für die dritte Iteration festgelegt.

Nach einem negativen Ergebnis n stellt die Einstellvorrichtung 1 in einer vierten Iteration eine Öffnungsposition des Durchflussregelventils 2 ein, die größer als die Öffnungsposition in der dritten Iteration ist, und zwar um die halbe Strecke der Änderung vor der dritten Iteration. Dieser Wert liegt in der Mitte zwischen einem Viertel Sv_ _{hydraulisch}/4 und einem Achtel S_{V-hydraulisch}/8, also bei drei Sechzehntel S_{V-hydrautisch}/3/16 der gesamten Strecke des Stellwegs Sv. Danach wiederholen sich die Vorgänge in Bezug auf das Durchlaufen der Sperrdauer und die Temperaturmessung zur Erfassung eines Durchflusses, die wiederum zu einem positiven Ergebnis p führt.

Nach dem positiven Ergebnis p stellt die Einstellvorrichtung 1 in der fünften Iteration eine Öffnungsposition des Durchflussregelventils 2 ein, die kleiner als die Öffnungsposition in der vierten Iteration ist, und zwar um die halbe Strecke der Änderung vor der vierten Iteration. Dieser Wert beträgt fünf Zweiunddreißigstel S_{V-hydraulisch}/5/32 der gesamten Strecke des Stellwegs Sv. Danach wiederholen sich die Vorgänge in Bezug auf das Durchlaufen der Sperrdauer und die Temperaturmessung zur Erfassung eines Durchflusses. In der ersten Erfassung wird keine signifikante Temperaturänderung gemessen. Wie in der dritten Iteration, führt die Einstellvorrichtung 1 aufgrund der negativen Erfassung eines Durchflusses mittels Temperaturmessung nochmals eine zweite Erfassung zur Verifikation durch. Dazu stellt die Einstellvorrichtung 1 vorübergehend das Durchflussregelventil 2 auf eine hydraulische Öffnungsposition ein, bei der ein Durchfluss sichergestellt ist, wartet erneut die Sperrdauer ab und führt anschließend eine Erfassung eines Durchflusses durch. Nachdem sich eine Temperaturänderung in der Verbraucherschleife 3 eingestellt hat, und diese bei der zweiten Erfassung eines Durchflusses verifiziert wird, steht fest, dass keine äußere Beeinträchtigung vorliegt. Es wird ein negatives Ergebnis n für die fünfte Iteration festgelegt.

Eine optionale, dargestellte sechste und eine siebte Iteration erfolgen entsprechend den Vorgängen in den vorhergehenden Iterationen.

In einer Ausführungsform der Erfindung führt die Einstellvorrichtung 1 innerhalb jeder Iteration, die zu einem positiven Ergebnis p führt, dreimal eine Erfassung eines Durchflusses durch. Zwischen den Temperaturmessungen wird das Durchflussregelventil 2 vorübergehend für eine Sperrdauer geschlossen, danach auf die entsprechende Öffnungsposition der Iteration wieder eingestellt, und nochmals eine Sperrdauer abgewartet. In jeder Iteration, die zu einem negativen Ergebnis n führt, erfolgt sechsmal eine Erfassung eines Durchflusses, da auf jede Erfassung, bei der keine signifikante Temperaturänderung gemessen wird, eine Erfassung zur Verifikation eines Durchflusses an einer höheren hydraulischen Öffnungsposition folgt.

Die Sperrdauer, die eine vorbestimmte Anzahl von wenigen Minuten beträgt, ermöglicht eine bessere Erkennung eines Gradienten der Temperaturänderung und vermindert Beeinflussungen der Temperaturmessung durch eine Trägheit von Wärmekapazitäten der flüssigkeitsführenden Komponenten im Temperierungssystem 10.

Ferner kann die Ermittlung jederzeit durch eine Deaktivierung bzw. Abschaltung der Einstellvorrichtung 1 zwischen zwei Temperierungsanforderungen unterbrochen werden. In diesem Fall setzt die Einstellvorrichtung 1 nach einer darauffolgenden Aktivierung bzw. Einschaltung und nach einem Durchlaufen einer Sperrdauer mit der nächsten ausstehenden Erfassung derjenigen Iteration fort, in der die Ermittlung unterbrochen wurde.

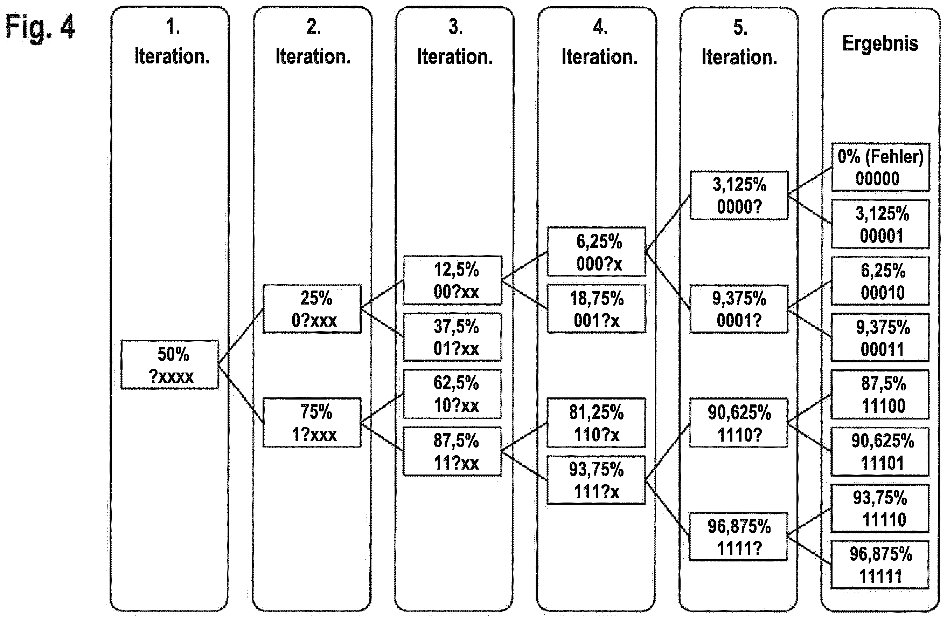

Fig. 4 zeigt eine Verzweigung prozentualer Werte in Bezug auf eine Auflösung von Messfehlern. Die Werte basieren auf einer symmetrischen Aufteilung von Wertebereichen, die zur Eingrenzung eines gesuchten Wertes nacheinander angenähert werden. Dabei sind positive und negative Messungen mit 1 und 0 bezeichnet, wobei noch ausstehende Iterationen mit X bezeichnet sind. Der Darstellung ist zu entnehmen, dass in der vorliegenden Anwendung der Ermittlung des Schwellwerts der hydraulischen minimalen Öffnungsposition nach fünf Iterationen eine Auflösung von 3,125 % in Bezug auf die gesamte Strecke Sv erreicht wird. Diese Genauigkeit ist für den Regelungsbetrieb der Einstellvorrichtung 1 ausreichend. Zudem kann der Aufwand bzw. die Dauer der Ermittlung begrenzt werden. Es muss lediglich sichergestellt sein, dass am Ende der Ermittlung ein positives Ergebnis p in Bezug einen Durchfluss an der Öffnungsposition vorliegt. Ansonsten greift die Einstellvorrichtung 1 beispielweise auf eine vorhergehende Iteration zurück oder führt eine weitere letzte Iteration durch.

Die Einstellvorrichtung 1 kann in einer Ausführungsform basierend auf Parametern wie der erfassten Temperaturdifferenz ΔT_{Ist}, einem Verlauf derselben oder der Dauer vorhergehender Aktivierungen entscheiden, ob eine aktuelle Temperierungsanforderung einen kleinen oder großen Anteil zur Heranführung einer Ist-Temperatur an eine Soll-Temperatur beiträgt. Diese Entscheidung ist insbesondere relevant, wenn ein großer Temperierungsbedarf besteht und an der Öffnungsposition der unterbrochenen Iteration zuvor kein Durchfluss durch das Durchflussregelventil 2 erfasst wurde. Dementsprechend kann die Einstellvorrichtung 1 eine Entscheidung treffen, dass eine Fortführung der Ermittlung, die erneut an einer im Wesentlichen geschlossenen Öffnungsposition ansetzt, vorübergehend um eine Temperierungsanforderung aufgeschoben wird, oder zu jeder zweiten Temperierungsanforderung ausgesetzt wird. Dadurch wird die Ermittlung eines hydraulischen Schwellwerts überwiegend in zeitliche Abschnitte des Regelungsbetriebs verschoben, in denen lediglich eine Aufrechterhaltung eines Temperaturzustands erfolgt.

Bei einer relativ kurzen Taktung durch einen Thermostat 12 von z.B. lediglich 15 oder 10 Minuten oder weniger zwischen Aktivierungen und Deaktivierungen der Einstellvorrichtung 1 kann eine Erfassung eines Durchflusses in einer fortgeführten Ermittlung erneut abgebrochen werden, ohne dass die Sperrdauer zwischen einem Einstellen einer Öffnungsposition und einer durchzuführenden Temperaturmessung an der Verbraucherschleife 3 abgelaufen ist. Demzufolge ist das Ergebnis der Erfassung ggf. nicht verwertbar und wird verworfen. Ferner ist bei solchen kurzen Taktungen auch eine Deaktivierung der Einstellvorrichtung 1, also eine Dauer zwischen Erfassungen ggf. nicht ausreichend lang, damit sich eine Temperatur des Wärmeträgers in der Verbraucherschleife 3 durch einen Wärmeaustausch bereits unterscheidungskräftig von einer Temperatur eines potentiell neu einströmenden Teils des Wärmeträgers unterscheidet. In diesem Fall kann die Einstellvorrichtung 1 in einer Ausführungsform basierend auf durchlaufenen Sperrdauern und Aktivierungsdauern eine Entscheidung treffen, dass das Durchflussregelventil 2 vorübergehend für die darauffolgende Temperierungsanforderung geschlossen bleibt. So ist auch während einer relativ kurzen Taktung sichergestellt, dass sich die Temperatur des Wärmeträgers in der geschlossenen Verbraucherschleife 3 bis zu einer Fortführung der Ermittlung durch einen Wärmeaustausch bereits unterscheidungskräftig geändert hat, und ein neu einströmender Teil des Wärmeträgers durch eine signifikante Temperaturänderung erfassbar wäre.

Darüber hinaus ist bei einer Ausführungsform der Einstellvorrichtung 1 vorgesehen, dass nach jeder Temperierungsanforderung nur eine unterbrochene oder als Nächstes ausstehende Iteration einschließlich einer umfassten vorbestimmten Anzahl von Erfassungen eines Durchflusses durchgeführt wird, und danach der Regelbetrieb der Einstellvorrichtung 1 zur selbstregulierenden Einstellung des Durchflussregelventils 2 zugunsten einer Temperierung durch das Temperierungssystems 10 beginnt. In einer weiteren Ausführungsform der Einstellvorrichtung 1 ist vorgesehen, dass nach jeder Temperierungsanforderung nur eine weitere Erfassung eines Durchflusses aus einer unterbrochenen oder als Nächstes ausstehenden Iteration durchgeführt wird, bevor der übliche Regelungsbetrieb wieder beginnt. Eine Gesamtdauer der Ermittlung über welche die Iterationen und deren Erfassungen zeitlich verteilt durchgeführt werden, hängt somit maßgeblich von den Dauern der Temperierungsanforderungen und denjenigen dazwischen ab, d.h. den Aktivierungsdauern und den Deaktivierungsdauern bzw. im Falle eines Thermostats 12 von einer Taktung desselben.

Die Einstellvorrichtung 1 startet oder wiederholt in einer Ausführungsform die Ermittlung des hydraulischen Schwellwerts dann, wenn sie von einem Durchflussregelventil 2 demontiert war und von einer Stromversorgung getrennt war. Diese Ausgangslage ist gegeben, wenn die Einstellvorrichtung 1 erstmals installiert wird oder zwischenzeitlich von dem Durchflussregelventil 2 abgenommen und bewusst vom Strom getrennt bzw. zurückgesetzt wurde. Eine Demontage kann die Einstellvorrichtung 1 dieser Ausführungsform durch einen freien Stellweg des Stellgieds 6 erfassen, der sich im montierten Zustand bis zu einem Kontakt mit dem vorgespannten Ventilstift 23 ergibt, oder im demontierten Zustand eben nicht ergibt.

Ferner kann bei einer Ausführungsform der Einstellvorrichtung 1 die Ermittlung des hydraulischen Schwellwerts durch den Nutzer oder einen Handwerker manuell erneut eingeleitet werden. Hierzu kann eine manuelle Eingabe eines vorbestimmten Signals erfolgen, beispielsweise in Form eines zeitlich getakteten Morsens des Signals zum Ein- und Ausschalten bzw. Aktivieren und Deaktivieren der Einstellvorrichtung 1.

Die Einstellvorrichtung 1 wiederholt in einer weiteren Ausführungsform die Ermittlung des hydraulischen Schwellwerts zyklisch in Bezug auf ein Wiederholungsintervall. Das Wiederholungsintervall ist beispielsweise auf eine vorbestimmte Anzahl von einigen hundert oder einigen tausend Temperierungsanforderungen oder Einstellvorgängen am Durchflussregelventil 2 festgelegt, nach denen eine Veränderung der Ventildichtung zu erwarten ist. Das Wiederholungsintervall kann ebenso auf eine vorbestimmte Anzahl von einigen hundert oder einige tausend Betriebsstunden der Einstellvorrichtung 1 festgelegt sein.

Nachfolgend wird mit den Figuren 5 bis 7 Bezug auf eine geeignete Ausführungsform aus der genannten Technik genommen, die Gegenstand von nebengeordneten Ansprüchen ist.

Die Einstellvorrichtung 1 ist auf einem Durchflussregelventil 2 montiert. Die Einstellvorrichtung 1 ist mittels eines Flansches 27 am Durchflussregelventil 2 befestigt. Das Durchflussregelventil 2 ist seinerseits in der hier abgebildeten Ausführungsform in einen Rücklaufverteiler 14 eingebaut. Der Rücklaufverteiler 14 weist ein in ihn eingeschraubtes Anschlussstück 18 auf, das den Rücklaufverteiler 14 mit einer nicht näher dargestellten Verbraucherschleife 3 verbindet. Das Durchflussregelventil 2 kann auch anderweitig in den Rücklaufverteiler 14 eingebaut sein. Das Anschlussstück 18 kann in den Rücklaufverteiler 14 auch eingepresst, eingeklebt, eingelötet, angeschweißt oder anderweitig befestigt sein.

Die Einstellvorrichtung 1 umfasst ein elektrisch ansteuerbares Stellglied 6. Im vorliegenden Beispiel fallen die Längsachse der Einstellvorrichtung 1 und des Stellglieds 6 zusammen. Das elektrisch ansteuerbare Stellglied 6 enthält ein in axialer Richtung bewegliches Betätigungsmittel 20. Die Längsachse des Betätigungsmittels 20 fällt ebenfalls mit der Längsachse des elektrisch ansteuerbaren Stellgliedes 6 zusammen. Das Betätigungsmittel 20 ist innerhalb des elektrisch ansteuerbaren Stellgliedes 6 angeordnet, weist ein in axialer Richtung längenveränderbares Bauteil, beispielsweise ein Dehnstoffelement 21, insbesondere eine Wachspatrone, auf, und ist durch eine koaxial dazu konzentrisch angeordnete Spiralfeder 22 vorgespannt. Das längenveränderbare Bauteil kann anstelle eines Dehnstoffelements 21 auch als ein elektrischer Miniaktuator ausgebildet sein, wenngleich diese häufig aus Kostengründen und wegen der vermuteten Geräuschentwicklung eher nicht erwogen werden. Statt der Spiralfeder 22 kann auch ein anderes geeignetes Mittel, beispielsweise ein Ringfederpaket oder dergleichen, eine Vorspannung erzeugen.

Durch elektrische Leitungen erhält das elektrisch ansteuerbare Stellglied 6 Signale von einem nicht näher dargestellten Temperaturerfassungsmittel 7 bzw. Temperatursensor am Rücklaufverteiler 14 hinsichtlich der ausgangsseitigen Rücklauftemperatur T_{Rücklauf} des durchfließenden Wärmeträgers. Das elektrisch ansteuerbare Stellglied 6 erhält über die Leitungen auch Temperatursignale von einem Temperaturerfassungsmittel 7 bzw. Temperatursensor am hier nicht dargestellten Vorlaufverteiler 13 hinsichtlich einer eingangsseitigen Vorlauftemperatur T_{Vorlauf} des durchfließenden Wärmeträgers. Eine weitere elektrische Leitung bildet in der vorliegenden Ausführungsform eine Schnittstelle 9 zu einem in Fig. 5 nicht, jedoch in Fig. 6 dargestellten Thermostat 12.

In der Einstellvorrichtung 1 enthaltene Berechnungsmittel 8 verarbeiten die über die Leitungen erhaltenen Signale und geben an das elektrisch ansteuerbare Stellglied 6 entsprechende Befehle oder Steuersignale aus, anhand derer das Dehnstoffelement 21 im Betätigungsmittel 20 aktiviert oder deaktiviert wird. Auf diese Weise wird letztendlich ein definierter Verstellweg oder Hub des Betätigungsmittels 20 in axialer Richtung realisiert. Dabei drückt das Betätigungsmittel 20 in axialer Richtung auf einen Betätigungsstift bzw. Ventilstift 23 des Durchflussregelventils 2 und betätigt damit selbiges. In der vorliegenden Ausführungsform fallen die Längsachse des Betätigungsmittels 20 und des Betätigungsstiftes bzw. Ventilstift 23 des Durchflussregelventils 2 zusammen.

Über die axiale Betätigung des Ventilstiftes 23 wird ein in der beispielhaften Ausführungsform als Ventilteller 24 ausgebildeter Ventilkopf von einem Ventilsitz 25 abgehoben und damit eine Ventilstellung definiert, die einer bestimmten Öffnungsposition des Durchflussregelventils 2 bzw. einem bestimmten Ventil-Öffnungsquerschnitt entspricht.

Der jeweilige Hub des Durchflussregelventils 2 bzw. der hieraus resultierende Öffnungsquerschnitt wird über ein Positionserfassungsmittel 15 in der Einstellvorrichtung 1 erfasst. Das Positionserfassungsmittel 15 besteht in der vorliegenden Ausführungsform aus einem Magneten 16, der über einen radial nach außen ragenden Ausleger 26 dem elektrisch ansteuerbaren Stellglied 6 zugeordnet und mit dem Betätigungsmittel 20 verbunden ist. Auf diese Weise bewegt sich der Magnet 16 in axialer Richtung parallel zum Dehnstoffelement 21 bzw. parallel zum Ventilteller 24, macht mit diesen denselben Hub bzw. Verstellweg mit, und dient als Referenz für den jeweiligen Hub. Ein dem Magnet 16 gegenüber angeordneter Hallsensor 17 ist weiterer Bestandteil des Positionserfassungsmittels 15. Mit dem Hallsensor 17 wird die Position wie auch die Bewegung bzw. der Hub des Magneten 16 erfasst und hierüber der Hub des Ventiltellers 24 gegenüber des Ventilsitzes 25 erfasst bzw. letztendlich der Querschnitt des Durchflussregelventils 2 bestimmt.

Die in Fig. 5 dargestellte Einstellvorrichtung 1 ist in mehrfacher Ausfertigung in dem in Fig. 6 erläuterten Temperierungssystem 10 verbaut. Die beispielhafte Ausführungsform des Temperierungssystems 10 gemäß Fig. 6 enthält eine Verteilervorrichtung 11 mit drei Einstellvorrichtungen 1, die mittels jeweiligen Flansch 27 auf dem jeweils zugeordneten Durchflussregelventil 2 montiert sind. Die jeweiligen Durchflussregelventile 2 sind in den einen Rücklaufverteiler 14 eingebaut. Auf der gegenüberliegenden Seite der Einstellvorrichtung 1 bzw. auf der in Einbaurichtung betrachteten Unterseite des Rücklaufverteilers 14 weist dieser jeweils ein Anschlussstück 18 auf, über welches die Verbindung zur jeweiligen Verbraucherschleife 3 hergestellt ist. Dabei bildet die jeweilige Verbraucherschleife 3 einen jeweiligen Wärmetauscher 30 aus. Am Anschlussstück 18 ist jeweils ein Temperaturerfassungsmittel 7, beispielsweise ein Rücklauftemperatursensor 7b, angebracht, insbesondere angeklipst oder aufgeklebt. Mit dem Rücklauftemperatursensor 7b wird die jeweilige ausgangsseitige Rücklauftemperatur T_{Rücklauf} des durch die jeweilige Verbraucherschleife 3 strömenden Wärmeträgers erfasst. Der Rücklauftemperatursensor 7b könnte auch an einer anderen geeigneten Stelle zur Erfassung der jeweiligen Rücklauftemperatur angebracht sein, beispielsweise unmittelbar nach dem Anschlussstück 18 an der Rohrwandung der linienhaft dargestellten Verbraucherschleife 3.

Das Temperierungssystem 10 weist ferner einen Vorlaufverteiler 13 auf. Der Vorlaufverteiler 13 enthält in der beispielhaften Ausführungsform drei Anschlussstücke 28 für die drei dargestellten Verbraucherschleifen 3. Ein Temperaturerfassungsmittel 7 ist abermals an jedem Anschlussstück 28 angebracht, beispielsweise ein Vorlauftemperatursensor 7a, um die jeweilige eingangsseitige Vorlauftemperatur T_{Vorlauf} des durch die jeweilige Verbraucherschleife 3 strömenden Wärmeträgers zu erfassen. Der Vorlauftemperatursensor 7a könnte auch an einer anderen geeigneten Stelle zur Erfassung der jeweiligen Vorlauftemperatur angebracht sein, beispielsweise unmittelbar nach dem Anschlussstück 28 an der Rohrwandung der linienhaft dargestellten Verbraucherschleife 3.

Der Vorlaufverteiler 13 ist mit dem Rücklaufverteiler 14 über eine Leitung 29 verbunden, die eine Temperierungsquelle 4 und eine Pumpe 5 enthält. Mit der Pumpe 5 kann der flüssige Wärmeträger, der von der Temperierungsquelle 4 mit Wärmeenergie aufgeladen oder ggf. gekühlt wurde, umgewälzt werden. Der durchfließende Wärmeträger wird von der Pumpe 5 zum Vorlaufverteiler 13 transportiert, dort strömt der Wärmeträger in die hier dargestellten drei Verbraucherschleifen 3 und durch diese hindurch zum Rücklaufverteiler 14 zurück, wobei die jeweilige Durchflussmenge durch den Durchflussquerschnitt des jeweiligen Durchflussregelventils 2, die im Rücklaufverteiler 14 verbaut sind, bestimmt wird. Vom Rücklaufverteiler 14 strömt das dort zusammengefasste durchfließende Wärmeträgermedium wieder zurück zur Pumpe 5 bzw. zur Temperierungsquelle 4.

Ein der jeweiligen Verbraucherschleife 3 zugeordnetes Thermostat 12 gibt ein Ansteuerungssignal aus, wenn ein Temperierungsbedarf besteht. Das Ansteuerungssignal wird vom Thermostat 12 beispielsweise über eine Schnittstelle 9, hier ein Kabel, zur Einstellvorrichtung 1 übertragen. Die Schnittstelle 9 könnte aber auch als eine drahtlose Verbindung ausgebildet sein. Die jeweilige Einstellvorrichtung 1 bestimmt mittels der jeweiligen Berechnungsmittel 8 in Abhängigkeit vom Aktivierungssignal oder Deaktivierungssignal des jeweiligen Thermostaten 12 und den jeweils zugeordneten Signalen bzw. Daten der Vorlauf- und der Rücklauftemperatur den jeweiligen Öffnungsquerschnitt des jeweiligen Durchflussregelventils 2.

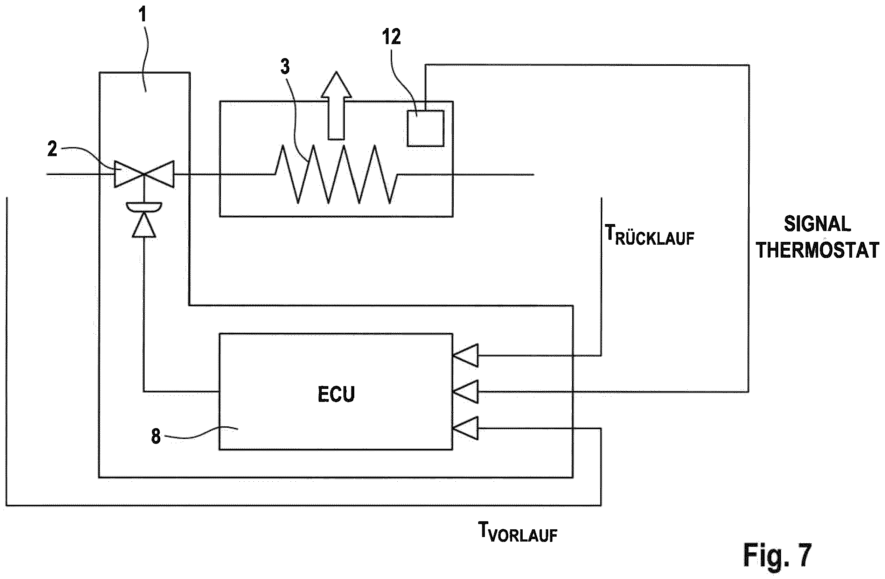

Die im Temperierungssystem 10 gemäß Fig. 6 verbauten Einstellvorrichtungen 1 gemäß Fig. 5 sind in Fig. 7 noch einmal in einem Blockschaltbild, das die Systemkomponenten zur Selbstregulierung darstellt, veranschaulicht.

Wärme oder Kälte werden von der Verbraucherschleife 3 an die Umgebung abgegeben. Ein Thermostat 12, insbesondere ein Raumthermostat in einem Wohnraum eines Gebäudes, gibt ein Signal aus. Das Signal vom Thermostat 12 wird einer ECU der Einstellvorrichtung 1 übergeben. Die ECU erhält ferner Temperatursignale bzw. Daten, wie beispielsweise die Rücklauftemperatur T_{Rücklauf} und die Vorlauftemperatur Tvoriauf. Ein Berechnungsmittel 8, das die ECU enthält, ist dazu eingerichtet, eine elektrische Ansteuerung des hier nicht näher dargestellten Stellgliedes 6 der Einstellvorrichtung 1 vorzunehmen, um einen Hub des Ventils zu realisieren, bzw. die einer einem bestimmten Durchflussquerschnitt zugeordnete, vorbestimmte Öffnungsposition des Durchflussregelventils 2 einzustellen.

Der Öffnungsquerschnitt des Durchflussregelventils 2 bzw. dessen Hub, wird basierend auf einer Regeldifferenz ΔT_{Regeldifferenz} berechnet, wobei die zu berechnende Regeldifferenz ΔT_{Regeidifferenz} zwischen der Temperaturdifferenz ΔT_{Ist} aus der erfassten eingangsseitigen Vorlauftemperatur T_{Vorlauf} und der ausgangsseitigen Rücklauftemperatur T_{Rücklauf} und einer vorbestimmten Temperaturspreizung ΔT_{Soll} von der ausgangsseitigen Rücklauftemperatur T_{Rücklauf} zu der eingangsseitigen Vorlauftemperatur T_{Vorlauf} gebildet wird.

Die Einstellvorrichtung 1 umfasst ferner ein hier nicht weiter dargestelltes Zeiterfassungsmittel und ein Speichermittel, die dazu eingerichtet sind, eine vorangegangene oder aktuelle Aktivierungsdauer des Aktivierungssignals vom Thermostat 12 und/oder eine Deaktivierungsdauer zwischen zwei Aktivierungen oder Deaktivierungen zu erfassen und zu speichern, wobei das Berechnungsmittel 8 mit der darin enthaltenen ECU dazu eingerichtet ist, die Temperaturspreizung ΔT_{Soll} basierend auf einer Aktivierungsdauer und/oder einer Deaktivierungsdauer variabel zu bestimmen.

### Alternative Aspekte zur Ausführung der geeigneten Technik

Nachfolgend werden weitere Aspekte und Alternativen der Einstellvorrichtung 1 des Verfahrens oder eines entsprechenden Temperierungssystems 10 und Baugruppen desselben genannt.

Das Thermostat 12 des Temperierungssystems 10, das in einem Raum angeordnet ist, kann ein Eingabemittel zur Eingabe eines Wertes, der für eine vorgebbare Raumtemperatur bezeichnend ist, und eine Schnittstelle 9 zum Ausgeben eines Aktivierungssignals für wenigstens eine Verbraucherschleife 3 in dem Raum aufweisen.

Das Thermostat 12 des Temperierungssystems 10 kann dazu eingerichtet sein, auf eine tatsächliche Raumtemperatur anzusprechen, indem das Thermostat 12 das Aktivierungssignal ausgibt, solange eine Abweichungstoleranz zwischen der vorgebbaren Raumtemperatur und der tatsächlichen Raumtemperatur überschritten wird.

Eine Aktivierung nach Definition der vorliegenden Offenbarung ist ein Einschaltzustand oder eine Inbetriebnahme aus einem Standby-Modus der Einstellvorrichtung 1 oder zumindest des Berechnungsmittels 8 in der Einstellvorrichtung 1, der bzw. die durch einen kontinuierlichen Signalpegel gestützt, durch einen Signalimpuls getriggert, oder eine in Form eines Signals angelegte Steuerspannung bzw. Ansteuerspannung zur Schaltung eines Transistors an einer Leistungsversorgung, eine in Form eines Signals direkt zugeführte Leistungsversorgung oder dergleichen ausgelöst wird. Eine Aktivierungsdauer bezieht sich definitionsgemäß auf die Zeitdauer vom Anfang bis zum Ende des dementsprechend ausgelösten Einschaltzustands oder der Inbetriebnahme aus einem Standby-Modus bzw. der Empfangsdauer eines kontinuierlichen Signalpegels, Steuerspannung, Ansteuerspannung oder Leistungszufuhr, oder der Zeitdauer zwischen zwei Signalimpulsen, die einen Einschaltvorgang und einen Abschaltvorgang bewirken. Eine Deaktivierung und eine Deaktivierungsdauer sind demgemäß der komplementäre Zustand und Zeitdauer, in dem bzw. in der kein Betrieb der Einstellvorrichtung 1 vorliegt oder zumindest keine Berechnung des Berechnungsmittels 8 oder Ansteuerung des Stellglieds 6 erfolgt.

Die Einstellvorrichtung 1 kann dazu eingerichtet sein, während einer Aktivierungsdauer die durch das Berechnungsmittel 8 berechnete elektrische Ansteuerung an das Stellglied 6 auszugeben, und während einer Deaktivierungsdauer keine elektrische Ansteuerung oder eine vorbestimmte elektrische Ansteuerung, die der geschlossenen Position des Durchflussregelventils 2 entspricht, an das Stellglied 6 auszugeben. Dadurch erfolgt je nach Typ des Stellglieds 6 eine Absperrung der Verbraucherschleife 3 nach einem Heizvorgang, sodass eine übermäßige Energiezufuhr bzw. ein Überschwingen der Temperaturregelung verhindert wird.

Die Einstellvorrichtung 1 kann dazu eingerichtet sein, während einer Deaktivierungsdauer eine elektrische Leistungszufuhr zu dem Berechnungsmittel 8 und/oder zu der Einstellvorrichtung 1 auszuschalten. Dadurch wird in den Deaktivierungsdauern, die sich z.B. auch über einen Sommer erstrecken können, Strom eingespart.

Das Berechnungsmittel 8 kann dazu eingerichtet sein, zumindest einen Wert einer vorangegangenen Öffnungsposition des Durchflussregelventils 2 in dem Speichermittel zu speichern. Dadurch kann bei Aktivierung der Einstellvorrichtung 1 zunächst eine Ventilstellung als Ausgangspunkt angefahren werden, die bereits im Laufe der vorherigen Heizdauern ermittelt wurde, und in der laufenden Heizdauer lediglich abweichend angepasst werden braucht.

Das Speichermittel kann einen vorab gespeicherten Referenzwert für die Aktivierungsdauer und/oder einen vorab gespeicherten Referenzwert für die Deaktivierungsdauer enthalten. Dadurch wird eine als komfortabel festgelegte Zeitdauer zur Erreichung einer vorgegebenen Temperatur als angestrebter Referenzwert hinterlegt, nach dem sich die Selbstregulierung richtet.

Das Speichermittel kann einen vorab gespeicherten Wertebereich für die Temperaturspreizung enthalten. Dadurch kann auf einfache Weise sichergestellt werden, dass der Betriebspunkt des Wärmetauschers 30 innerhalb eines energieeffizienten Bereichs gewählt wird.

Das Speichermittel kann ein vorab gespeichertes Kennfeld mit zugeordneten Werten von Aktivierungsdauern und/oder Deaktivierungsdauern und vorgegebenen Temperaturspreizungen zur Bestimmung der Temperaturspreizung enthalten. Dadurch kann eine vorbestimmte universelle Regelung mit geringerer Verarbeitungsleistung umgesetzt werden.

Das Speichermittel kann eine vorab gespeicherte Steuerungslogik zur Berechnung der Temperaturspreizung enthalten. Dadurch kann eine individuellere Regelung umgesetzt werden.

Die Einstellvorrichtung 1 kann dazu eingerichtet sein, die Temperaturspreizung in Abhängigkeit der Vorlauftemperatur zu verändern, und/oder die Einstellvorrichtung 1 kann dazu eingerichtet sein, eine Bandbreite der Temperaturspreizung in Abhängigkeit der Vorlauftemperatur zu verändern, und/oder die Einstellvorrichtung 1 kann dazu eingerichtet sein, über die Schnittstelle 9 weitere externe Signale mit Betriebsparametern aus dem Temperierungssystem 10 zu empfangen; und das Berechnungsmittel 8 kann dazu eingerichtet sein, die Temperaturspreizung in Abhängigkeit der Betriebsparameter anzupassen. Dadurch kann eine Regelung umgesetzt werden, die anhand einer Änderung der Vorlauftemperatur Witterungsschwankungen oder Jahresszeiten erfasst und einen effizienten Arbeitspunkt entsprechend anpasst oder weitere komfortorientierte Funktionen, die an einem multifunktionalen Raumthermostat vorgegeben werden können, in die Regelung mit einfließen lassen.

In einem Raum des Gebäudes können ein Thermostat 12 und zwei oder mehr Verbraucherschleifen 3 bzw. Heiz- oder Kühlkreise angeordnet sein. Dadurch ist es möglich große Räume durch mehrere installierte Heiz- oder Kühlschlangen mit standardisierten Durchmessern und einem in Summe geringeren Strömungswiderstand zu versorgen, die durch eigene Einstellvorrichtungen 1, jedoch denselben Raumthermostat, geregelt werden.

Das Thermostat 12 kann ein Bimetall-Element aufweisen, das auf die tatsächliche Raumtemperatur anspricht und eine Ausgabe des Aktivierungssignals oder des Deaktivierungssignals betätigt. Dadurch wird eine besonders einfache, zuverlässige und kostengünstige Ausführung des Raumthermostats ohne Elektronik und Sensorik realisiert.

Das Aktivierungssignal oder Deaktivierungssignal kann ein binäres Signal sein, das einen Einschaltzustand mit einem Signalpegel oberhalb eines vorbestimmen Pegelwertes und einen Ausschaltzustand ohne Signalpegel oder einem Signalpegel unterhalb des vorbestimmen Pegelwertes umfasst. Dadurch wird ebenfalls eine besonders einfache und kostengünstige Ausführung der Signalerzeugung und der Signalerkennung realisiert.

Ein Thermostat 12 kann einen Mikrocomputer und einen Temperatursensor 7a, 7b zur Erfassung der tatsächlichen Raumtemperatur umfassen; wobei das Thermostat 12 einen Verlauf der tatsächlichen Raumtemperatur erfasst und speichert, während und/oder nachdem das Aktivierungssignal oder das Deaktivierungssignal ausgegeben wird; und das Thermostat 12 und eine Einstellvorrichtung 1 dazu eingerichtet sein, Daten zu einem Verlauf erfasster tatsächlicher Raumtemperaturen zu kommunizieren. Dadurch wird eine multifunktionale Ausführung des Temperierungssystems 10 realisiert, die eine adaptive Regelung an weitere komfortorientierte Parameter, wie eine Beeinflussung eines Heizkurvenverlaufs in Abhängigkeit einer Ausgangs- und Zieltemperatur und/oder einer Außentemperatur oder einer Uhrzeit oder dergleichen ermöglicht.

Das Aktivierungssignal und/oder das Deaktivierungssignal kann mittels drahtlosen Schnittstellen 9 von einem bestimmten Thermostat 12 zu einer zugeordneten Einstellvorrichtung 1 kommuniziert werden. Dadurch kann eine Verkabelung von dem Raumthermostat zu der Einstellvorrichtung 1 entfallen und ein Installationsaufwand verringert werden. Ferner kann über eine solche drahtlose Schnittstelle 9 ebenso eine Verbindung zwischen einem Smartphone, Tablet PC oder dergleichen und einer Einstellvorrichtung 1 oder einem Thermostat 12 aufgenommen werden, wodurch eine weitere Eingabemöglichkeit für den Nutzer zum System ermöglicht wird.

Es kann eine kleinere Temperaturspreizung bestimmt werden, wenn zumindest eine vorangegangene Aktivierungsdauer größer als ein Referenzwert ist, oder eine größere Temperaturspreizung bestimmt werden, wenn zumindest eine vorangegangene Aktivierungsdauer kleiner als der Referenzwert ist. Dadurch orientiert sich die Selbstregulierung an einer vorab als komfortabel festgelegten Zeitdauer zur Erreichung einer vorgegebenen.

Die Temperaturspreizung kann basierend auf einem Verlauf aufeinander folgender, vorangegangener Aktivierungsdauern bestimmt werden. Dadurch wird eine bessere Anpassung der Selbstregulierung an Nutzerverhalten, Jahreszeiten und dergleichen ermöglicht.

Die Einstellvorrichtung 1 kann ein Positionserfassungsmittel 15 aufweisen, das derart ausgebildet ist, eine aktuelle Position des Stellglieds 6 zu erfassen. Dadurch wird eine je nach Typ des Stellglieds 6 erforderliche Einhaltung eines vorgegebenen Stellwegs ermöglicht.

Das Positionserfassungsmittel 15 kann aus einem Magneten 16 und einem dem Magneten 16 zugeordneten Hallsensor 17 gebildet sein. Dadurch wird eine exakte Erfassung und Ausführung eines vorgegebenen Stellwegs ermöglicht.

Das Stellglied 6 kann durch verschiedene Arten von Aktoren bereitgestellt sein, deren Stellkraft auf einer elektromotorischen Leistung, einer Wärmeausdehnung, einer Federvorspannung oder dergleichen basiert, solange der Stellweg durch eine Ansteuerung seitens des Berechnungsmittels 8 ansteuerbar ist.

In den vorstehend diskutierten Figuren 5 bis 7 wurden die nachfolgend zusammenfassend aufgelisteten Bezugszeichen verwendet, wobei diese Auflistung keinen Anspruch auf Vollständigkeit erhebt:
- 1: Einstellvorrichtung;
- 2: Durchflussregelventil;
- 3: Verbraucherschleife;
- 4: Temperierungsquelle;
- 5: Pumpe;
- 6: Stellglied;
- 7: Temperaturerfassungsmittel;
- 7a: Vorlauftemperatursensor;
- 7b: Rücklauftemperatursensor;
- 8: Berechnungsmittel;
- 9: Schnittstelle;
- 10: Temperierungssystem;
- 11: Verteilervorrichtung;
- 12: Thermostat,
- 13: Vorlaufverteiler;
- 14: Rücklaufverteiler;
- 15: Positionserfassungsmittel;
- 16: Magnet;
- 17: Hallsensor;
- 18: Anschlussstück;
- 20: Betätigungsmittel;
- 21: Dehnstoffelement;
- 22: Spiralfeder;
- 23: Ventilstift;
- 24: Ventilteller;
- 25: Ventilsitz;
- 26: Ausleger;
- 27: Flansch;
- 28: Anschlussstück;
- 29: Leitung;
- 30: Wärmetauscher;

- S_{V}: gesamte bewegbare Strecke des Stellwegs
- S_{V min}: geschlossene Position des Durchflussregelventils
- S_{V-hydraulisch-min}: hydraulische minimale Öffnungsposition des Durchflussregelventils
- S_{V-hydraulisch}: hydraulische begrenzte Öffnungsposition des Durchflussregelventils

- T_{Vorlauf}: eingangsseitige Vorlauftemperatur des durchfließenden Wärmeträgers;
- T_{Rücklauf}: ausgangsseitige Rücklauftemperatur des durchfließenden Wärmeträgers;
- ΔT_{Ist}: Temperaturdifferenz ;
- ΔT_{Soll}: Temperaturspreizung;
- ΔT_{Regeldifferenz}: Regeldifferenz;
- T_{Raum-Soll}: vorgebbare Raumtemperatur;
- T_{Raum-Ist}: tatsächliche Raumtemperatur;

## Patentansprüche

1. Einstellvorrichtung (1) zur selbstregulierenden Einstellung eines Durchflussregelventils (2) einer Verbraucherschleife (3) mit Wärmetauscher (30), insbesondere in einem Temperierungssystem (10) für Gebäude mit einer Temperierungsquelle (4), einem flüssigen Wärmeträger und einer Pumpe (5), wobei die Einstellvorrichtung (1) aufweist:
ein Stellglied (6), das mit dem Durchflussregelventil (2) derart koppelbar eingerichtet ist, dass eine Öffnungsposition des Durchflussregelventils (2) zwischen einer geschlossenen Position (S_{V min}) und einer geöffneten Position, insbesondere graduell oder schrittweise, durch die Einstellvorrichtung (1) einstellbar und erfassbar ist;
Temperaturerfassungsmittel (7), die eine bezüglich der Verbraucherschleife (3) eingangsseitige Vorlauftemperatur (T_{Vorlauf}) und eine ausgangsseitige Rücklauftemperatur (T_{Rücklauf}) des durchfließenden Wärmeträgers erfassen; wobei
ein Berechnungsmittel (8), das dazu eingerichtet ist, eine Ansteuerung des Stellglieds (6), die einer - einem bestimmten Durchflussquerschnitt zugeordneten - vorbestimmten Öffnungsposition des Durchflussregelventils (2) entspricht, derart zu berechnen, dass eine Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}) an eine vorbestimmte Temperaturspreizung (ΔT_{Soll}) von der ausgangsseitigen Rücklauftemperatur (T_{Rücklauf}) zu der eingangsseitigen Vorlauftemperatur (T_{Vorlauf}) herangeführt wird; und
die Einstellvorrichtung (1) einen Durchfluss durch das Durchflussregelventil (2) basierend auf einer Temperaturänderung des Wärmeträgers in der Verbraucherschleife (3) erfasst;
**dadurch gekennzeichnet, dass**
die Einstellvorrichtung (1) dazu eingerichtet ist, eine hydraulische minimale Öffnungsposition (S_{V-hydraulisch-min}) des Durchflussregelventils (2), bei der ein minimaler Durchfluss erfassbar ist, entlang eines Stellwegs zu ermitteln; und
die Ermittlung der hydraulischen minimalen Öffnungsposition (S_{V-hydraulisch-min}) Iterationen von verschiedenen Öffnungspositionen entlang des Stellwegs des Durchflussregelventils (2) umfasst;
jede Iteration einer Öffnungsposition des Durchflussregelventils (2) wenigstens eine Erfassung des Durchflusses durch das Durchflussregelventil (2) umfasst; und
sich die Ermittlung der hydraulischen minimalen Öffnungsposition (S_{V-hydraulisch-min}) über mehrere externe Temperierungsanforderungen an die Verbraucherschleife (3) erstreckt, und fehlende Iterationen der Ermittlung, die nach Deaktivierungen der Einstellvorrichtung (1) zwischen den Temperierungsanforderungen noch ausstehen, bei erneuten Aktivierungen der Einstellvorrichtung (1) fortgeführt werden.

2. Einstellvorrichtung (1) zur selbstregulierenden Einstellung eines Durchflussregelventils (2) einer Verbraucherschleife (3) mit Wärmetauscher (30), insbesondere in einem Temperierungssystem (10) für Gebäude mit einer Temperierungsquelle (4), einem flüssigen Wärmeträger und einer Pumpe (5), wobei die Einstellvorrichtung (1) aufweist:
ein elektrisch ansteuerbares Stellglied (6), das mit dem Durchflussregelventil (2) derart koppelbar eingerichtet ist, dass eine Öffnungsposition des Durchflussregelventils (2) zwischen einer geschlossenen Position (S_{V min}) und einer geöffneten Position, insbesondere graduell oder schrittweise, durch die Einstellvorrichtung (1) einstellbar und erfassbar ist;
Temperaturerfassungsmittel (7), die eine bezüglich der Verbraucherschleife (3) eingangsseitige Vorlauftemperatur (T_{Vorlauf}) und eine ausgangsseitige Rücklauftemperatur (T_{Rücklauf}) des durchfließenden Wärmeträgers erfassen;
ein Berechnungsmittel (8), das dazu eingerichtet ist, eine elektrische Ansteuerung des Stellglieds (6), die einer - einem bestimmten Durchflussquerschnitt zugeordneten - vorbestimmten Öffnungsposition des Durchflussregelventils (2) entspricht, basierend auf einer Regeldifferenz (ΔT_{Regeldifferenz}) zu berechnen, wobei die zu berechnende Regeldifferenz (ΔT_{Regeldifferenz}) zwischen
einer Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}), und einer vorbestimmten Temperaturspreizung (ΔT_{Soll}) von der ausgangsseitigen Rücklauftemperatur (T_{Rücklauf}) zu der eingangsseitigen Vorlauftemperatur (T_{Vorlauf}) gebildet wird;
eine Schnittstelle (9) zum Empfangen eines externen Aktivierungssignals zur Aktivierung des Berechnungsmittels (8) und/oder der Einstellvorrichtung (1); wobei
die Einstellvorrichtung (1) ein Zeiterfassungsmittel und ein Speichermittel umfasst, die dazu eingerichtet sind, eine vorangegangene oder aktuelle Aktivierungsdauer des Aktivierungssignals und/oder eine Deaktivierungsdauer zwischen zwei Aktivierungen zu erfassen und zu speichern; und
das Berechnungsmittel (8) dazu eingerichtet ist, die Temperaturspreizung (ΔT_{Soll}) basierend auf einer Aktivierungsdauer und/oder einer Deaktivierungsdauer variabel zu bestimmen;
**dadurch gekennzeichnet, dass**
die Einstellvorrichtung (1) dazu eingerichtet ist, eine hydraulische minimale Öffnungsposition (S_{V-hydraulisch-min}) des Durchflussregelventils (2), bei der ein minimaler Durchfluss erfassbar ist, entlang eines Stellwegs zu ermitteln; und
die Einstellvorrichtung (1) einen Durchfluss durch das Durchflussregelventil (2) basierend auf einer Temperaturänderung des Wärmeträgers in der Verbraucherschleife (3) erfasst; wobei
die Ermittlung der hydraulischen minimalen Öffnungsposition (S_{V-hydraulisch-min}) Iterationen von verschiedenen Öffnungspositionen entlang des Stellwegs des Durchflussregelventils (2) umfasst;
jede Iteration einer Öffnungsposition des Durchflussregelventils (2) wenigstens eine Erfassung des Durchflusses durch das Durchflussregelventil (2) umfasst; und
sich die Ermittlung der hydraulischen minimalen Öffnungsposition (S_{V-hydrauiisch-min}) über mehrere externe Temperierungsanforderungen an die Verbraucherschleife (3) erstreckt, und fehlende Iterationen der Ermittlung, die nach Deaktivierungen der Einstellvorrichtung (1) zwischen den Temperierungsanforderungen noch ausstehen, bei erneuten Aktivierungen der Einstellvorrichtung (1) fortgeführt werden.

3. Einstellvorrichtung (1) nach Anspruch 1 oder 2, wobei
die erste Iteration an einer hydraulischen Öffnungsposition (S_{V-hydraulisch}) beginnt, bei der ein Durchfluss durch das Durchflussregelventil (2) zu erwarten ist; und
die Einstellvorrichtung (1) eine Öffnungsposition des Durchflussregelventils (2) für eine nachfolgende Iteration in Richtung zu einer geschlossenen Position (S_{V-min}) des Durchflussregelventils (2) versetzt einstellt, wenn ein Durchfluss durch das Durchflussregelventil (2) erfasst wird.

4. Einstellvorrichtung (1) nach Anspruch 3, wobei
die Einstellvorrichtung (1) eine Öffnungsposition des Durchflussregelventils (2) für eine nachfolgende Iteration entgegengesetzt der Richtung zu der geschlossenen Position (S_{V-min}) des Durchflussregelventils (2) versetzt einstellt, wenn kein Durchfluss durch das Durchflussregelventil (2) erfasst wird.

5. Einstellvorrichtung (1) nach einem der Ansprüche 1 bis 4, wobei
die Einstellvorrichtung (1) eine Öffnungsposition des Durchflussregelventils (2) bei einer nachfolgenden Iteration um eine Strecke auf dem Stellweg versetzt, die der Hälfte des Betrags der versetzten Strecke bei der vorhergehenden Iteration entspricht.

6. Einstellvorrichtung (1) nach einem der Ansprüche 1 bis 5, wobei
die Einstellvorrichtung (1) die hydraulische minimale Öffnungsposition (Sv_ _{hydrnulisch-min}) innerhalb einer vorbestimmten Anzahl von Iterationen verschiedener Öffnungspositionen des Durchflussregelventils (2) ermittelt.

7. Einstellvorrichtung (1) nach einem der Ansprüche 1 bis 6, wobei
wenn kein Durchfluss durch das Durchflussregelventil (2) erfasst wird, eine Iteration der entsprechenden Öffnungsposition noch eine Erfassung des Durchflusses an einer höheren Öffnungsposition des Durchflussregelventils (2) umfasst.

8. Einstellvorrichtung (1) nach einem der Ansprüche 1 bis 7, wobei
jede Iteration eine vorbestimmte Anzahl von Erfassungen des Durchflusses durch das Durchflussregelventil (2) an einer Öffnungsposition des Durchflussregelventils (2) umfasst.

9. Einstellvorrichtung (1) nach einem der Ansprüche 1 bis 8, wobei
zwischen jeder Iteration einer Öffnungsposition, zwischen jeder Erfassung des Durchflusses innerhalb einer Iteration einer Öffnungsposition und/oder zwischen einer Aktivierung und einer Fortführung von ausstehenden Iterationen der Ermittlung, zunächst eine vorbestimmte Sperrdauer durchlaufen wird, für die das Durchflussregelventil (2) geschlossen wird und/oder in der keine Temperatur erfasst wird.

10. Einstellvorrichtung (1) nach einem der Ansprüche 1 bis 9, wobei
das Fortführen einer unterbrochenen Iteration der Ermittlung der hydraulischen minimalen Öffnungsposition (S_{V-hydraulisch-min}) vorübergehend für eine Temperierungsanforderung ausgesetzt wird;
wenn an der Öffnungsposition der unterbrochenen Iteration zuvor kein Durchfluss durch das Durchflussregelventil (2) erfasst wurde.

11. Einstellvorrichtung (1) nach einem der Ansprüche 1 bis 10, wobei
die Einstellvorrichtung (1) die Ermittlung der hydraulischen minimalen Öffnungsposition (S_{V-hydrauiisch-min}) durchführt, wenn sie von einer Stromzufuhr getrennt wurde, wenn eine Demontage in Bezug auf das Durchflussregelventil (2) mittels des Stellglieds (6) erfasst wurde und/oder ein vorbestimmtes Schaltmuster in Bezug auf die Aktivierung erfasst wurde.

12. Einstellvorrichtung (1) nach einem der Ansprüche 1 bis 11, wobei
die Einstellvorrichtung (1) die Ermittlung der hydraulischen minimalen Öffnungsposition (S_{V-hydrauiisch-min}) durchführt, wenn ein vorbestimmtes Wiederholungsintervall abläuft.

13. Verfahren zur selbstregulierenden Einstellung eines Durchflusses eines flüssigen Wärmeträgers durch eine Verbraucherschleife (3) mit Wärmetauscher (30) in einem Temperierungssystem (10) für Gebäude mit einer Temperierungsquelle (4) und einer Pumpe (5) mittels einer Einstellvorrichtung (1) für ein Durchflussregelventil (2);
wobei das Verfahren zumindest die folgenden Schritte aufweist:
Erfassen einer eingangsseitigen Vorlauftemperatur (Tvoriauf) und einer ausgangsseitigen Rücklauftemperatur (T_{Rücklauf}) des durchlaufenden Wärmeträgers an der Verbraucherschleife (3);
Einstellen einer - einem bestimmten Durchflussquerschnitt zugeordneten - Öffnungsposition des Durchflussregelventils (2) derart, dass eine Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}) an eine vorbestimmte Temperaturspreizung (ΔT_{Soll}) von der ausgangsseitigen Rücklauftemperatur (T_{Rücklauf}) zu der eingangsseitigen Vorlauftemperatur (T_{Vorlauf}) herangeführt wird;
**gekennzeichnet durch die Schritte:**
Ermitteln einer hydraulischen minimalen Öffnungsposition (S_{V-hydrauiisch-min}) des Durchflussregelventils (2), bei der ein minimaler Durchfluss erfassbar ist, entlang eines Stellwegs; mittels
Erfassen eines Durchflusses durch das Durchflussregelventil (2) basierend auf einer Temperaturänderung des Wärmeträgers in der Verbraucherschleife (3); wobei
die Ermittlung der hydraulischen minimalen Öffnungsposition (S_{V-hydraulisch-min}) Iterationen von verschiedenen Öffnungspositionen entlang des Stellwegs des Durchflussregelventils (2) umfasst;
jede Iteration einer Öffnungsposition des Durchflussregelventils (2) wenigstens eine Erfassung des Durchflusses durch das Durchflussregelventil (2) umfasst; und
sich die Ermittlung der hydraulischen minimalen Öffnungsposition (S_{V-hydraulisch-min}) über mehrere externe Temperierungsanforderungen an die Verbraucherschleife (3) erstreckt, und fehlende Iterationen der Ermittlung, die nach Deaktivierungen der Einstellvorrichtung (1) zwischen den Temperierungsanforderungen noch ausstehen, bei erneuten Aktivierungen der Einstellvorrichtung (1) fortgeführt werden.

14. Verfahren zur selbstregulierenden Einstellung eines Durchflusses eines flüssigen Wärmeträgers durch eine extern aktivierbare Verbraucherschleife (3) mit Wärmetauscher (30) in einem Temperierungssystem (10) für Gebäude mit einer Temperierungsquelle (4) und einer Pumpe (5) mittels einer Einstellvorrichtung (1) für ein Durchflussregelventil (2);
wobei das Verfahren zumindest die folgenden Schritte aufweist:
Erfassen einer vorangegangenen oder aktuellen Aktivierungsdauer und/oder einer Deaktivierungsdauer der Verbraucherschleife (3);
Erfassen einer eingangsseitigen Vorlauftemperatur (T_{Vorlauf}) und einer ausgangsseitigen Rücklauftemperatur (T_{Rücklauf}) des durchlaufenden Wärmeträgers an der Verbraucherschleife (3);
Bestimmen einer variablen Temperaturspreizung (ΔT_{Soll}) von der ausgangsseitigen Rücklauftemperatur (T_{Rücklauf}) zu der eingangsseitigen Vorlauftemperatur (T_{Vorlauf}) basierend auf der Aktivierungsdauer und/oder der Deaktivierungsdauer;
Berechnen einer Regeldifferenz (ΔT_{Regeldifferenz}) zwischen einer Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}), sowie der vorbestimmten Temperaturspreizung (ΔT_{Soll}); und
Berechnen und Einstellen eines verstellbaren Durchflussquerschnitts in der Verbraucherschleife (3) basierend auf der Regeldifferenz (ΔT_{Regeldifferenz}); wobei eine - dem berechneten Durchflussquerschnitt zugeordnete - Öffnungsposition des Durchflussregelventils (2) in der Verbraucherschleife (3) eingestellt wird;
**gekennzeichnet durch die Schritte:**
Ermitteln einer hydraulischen minimalen Öffnungsposition (S_{V-hydraulisch-min}) des Durchflussregelventils (2), bei der ein minimaler Durchfluss erfassbar ist, entlang eines Stellwegs; mittels
Erfassen eines Durchflusses durch das Durchflussregelventil (2) basierend auf einer Temperaturänderung des Wärmeträgers in der Verbraucherschleife (3); wobei
die Ermittlung der hydraulischen minimalen Öffnungsposition (S_{V-hydraulisch-min}) Iterationen von verschiedenen Öffnungspositionen entlang des Stellwegs des Durchflussregelventils (2) umfasst;
jede Iteration einer Öffnungsposition des Durchflussregelventils (2) wenigstens eine Erfassung des Durchflusses durch das Durchflussregelventil (2) umfasst; und
sich die Ermittlung der hydraulischen minimalen Öffnungsposition (S_{V-hydraulisch-min}) über mehrere externe Temperierungsanforderungen an die Verbraucherschleife (3) erstreckt, und fehlende Iterationen der Ermittlung, die nach Deaktivierungen der Einstellvorrichtung (1) zwischen den Temperierungsanforderungen noch ausstehen, bei erneuten Aktivierungen der Einstellvorrichtung (1) fortgeführt werden.

15. Verfahren nach Anspruch 13 oder 14, wobei
die erste Iteration an einer hydraulischen Öffnungsposition (S_{V-hydraulisch}) beginnt, bei der ein Durchfluss durch das Durchflussregelventil (2) zu erwarten ist; und
eine Öffnungsposition des Durchflussregelventils (2) für eine nachfolgende Iteration in Richtung zu einer geschlossenen Position (Sv-min) des Durchflussregelventils (2) versetzt wird, wenn ein Durchfluss durch das Durchflussregelventil (2) erfasst wird.

16. Verfahren nach Anspruch 15, wobei
eine Öffnungsposition des Durchflussregelventils (2) für eine nachfolgende Iteration entgegengesetzt der Richtung zu der geschlossenen Position (S_{V-min}) des Durchflussregelventils (2) versetzt wird, wenn kein Durchfluss durch das Durchflussregelventil (2) erfasst wird.

17. Verfahren nach einem der Ansprüche 13 bis 16, wobei
eine Öffnungsposition des Durchflussregelventils (2) bei einer nachfolgenden Iteration um eine Strecke auf dem Stellweg versetzt wird, die der Hälfte des Betrags der versetzten Strecke bei der vorhergehenden Iteration entspricht.

18. Verfahren nach einem der Ansprüche 13 bis 17, wobei
die hydraulische minimale Öffnungsposition (S_{V-hydrauiisch-min}) innerhalb einer vorbestimmten Anzahl von Iterationen verschiedener Öffnungspositionen des Durchflussregelventils (2) ermittelt wird.

19. Verfahren nach einem der Ansprüche 13 bis 18, wobei
wenn kein Durchfluss durch das Durchflussregelventil (2) erfasst wird, eine Iteration der entsprechenden Öffnungsposition noch eine Erfassung des Durchflusses an einer höheren Öffnungsposition des Durchflussregelventils (2) umfasst.

20. Verfahren nach einem der Ansprüche 13 bis 19, wobei
jede Iteration eine vorbestimmte Anzahl von Erfassungen des Durchflusses durch das Durchflussregelventil (2) an einer Öffnungsposition des Durchflussregelventils (2) umfasst.

21. Verfahren nach einem der Ansprüche 13 bis 20, wobei
zwischen jeder Iteration einer Öffnungsposition, zwischen jeder Erfassung des Durchflusses innerhalb einer Iteration einer Öffnungsposition und/oder zwischen einer Aktivierung und einer Fortführung von ausstehenden Iterationen der Ermittlung, zunächst eine vorbestimmte Sperrdauer durchlaufen wird, für die das Durchflussregelventil (2) geschlossen wird und/oder in der keine Temperatur erfasst wird.

22. Verfahren nach einem der Ansprüche 13 bis 21, wobei
das Fortführen einer unterbrochenen Iteration der Ermittlung der hydraulischen minimalen Öffnungsposition (Sv-hydrauiisch-min) vorübergehend für eine Temperierungsanforderung ausgesetzt wird;
wenn an der Öffnungsposition der unterbrochenen Iteration zuvor kein Durchfluss durch das Durchflussregelventil (2) erfasst wurde.

23. Verfahren nach einem der Ansprüche 13 bis 22, wobei
die Ermittlung der hydraulischen minimalen Öffnungsposition (S_{V-hydraulisch-min}) durchgeführt wird, wenn die Einstellvorrichtung (1) von einer Stromzufuhr getrennt wurde, wenn eine Demontage in Bezug auf das Durchflussregelventil (2) erfasst wurde und/oder ein vorbestimmtes Schaltmuster in Bezug auf die Aktivierung erfasst wurde.

24. Verfahren nach einem der Ansprüche 13 bis 23, wobei
die Ermittlung der hydraulischen minimalen Öffnungsposition (S_{V-hydraulisch-min}) durchgeführt wird, wenn ein vorbestimmtes Wiederholungsintervall abläuft.

## Claims

1. Adjustment apparatus (1) for self-regulating adjustment of a flow control valve (2) of a consumer loop (3) comprising a heat exchanger (30), in particular in a temperature regulating system (10) for buildings having a temperature regulating source (4), a liquid heating medium and a pump (5), wherein the adjustment apparatus (1) comprises:
an actuator (6) which is configured so as to be able to be coupled to the flow control valve (2) such that an opening position of the flow control valve (2) can be adjusted and detected between a closed position (S_{V min}) and an open position, in particular gradually or in steps, by means of the adjustment apparatus (1);
temperature detection means (7) which detect a supply temperature (T_{supply}), which is on the input side in relation to the consumer loop (3), and an output-side return temperature (Tᵣₑₜᵤᵣₙ) of the through-flowing heating medium; wherein
a calculation means (8) which is configured to calculate an activation of the actuator (6) which corresponds to a predetermined opening position - allocated to a specific flow cross-section - of the flow control valve (2) such that a temperature difference (ΔT_{actual}) from the detected input-side supply temperature (T_{supply}) and the output-side return temperature (Tᵣₑₜᵤᵣₙ) is brought up to a predetermined temperature spread (ΔT_{desired}) from the output-side return temperature (Tᵣₑₜᵤᵣₙ) to the input-side supply temperature (T_{supply}), and
the adjustment apparatus (1) detects a flow through the flow control valve (2) based upon a temperature change of the heating medium in the consumer loop (3);
**characterized in that**
the adjustment apparatus (1) is configured to determine a hydraulic minimum opening position (S_{V-hydraulic-min}) of the flow control valve (2), at which a minimum flow can be detected, along an actuating travel path; and
the determination of the hydraulic minimum opening position (S_{V-hydraulic-min}) comprises iterations of different opening positions along the actuating travel path of the flow control valve (2);
each iteration of an opening position of the flow control valve (2) comprises at least one detection of the flow through the flow control valve (2); and
the determination of the hydraulic minimum opening position (S_{V-hydraulic-min}) extends over a plurality of external temperature regulating requests to the consumer loop (3), and missing iterations of the determination which are still pending after deactivations of the adjustment apparatus (1) between the temperature regulating requests are continued during renewed activations of the adjustment apparatus (1).

2. Adjustment apparatus (1) for self-regulating adjustment of a flow control valve (2) of a consumer loop (3) comprising a heat exchanger (30), in particular in a temperature regulating system (10) for buildings having a temperature regulating source (4), a liquid heating medium and a pump (5), wherein the adjustment apparatus (1) comprises:
an electrically activatable actuator (6) which is configured so as to be able to be coupled to the flow control valve (2) such that an opening position of the flow control valve (2) can be adjusted and detected between a closed position (S_{V min}) and an open position, in particular gradually or in steps, by means of the adjustment apparatus (1);
temperature detection means (7) which detect a supply temperature (T_{supply}), which is on the input side in relation to the consumer loop (3), and an output-side return temperature (Tᵣₑₜᵤᵣₙ) of the through-flowing heating medium;
a calculation means (8) which is configured to calculate an electrical activation of the actuator (6) which corresponds to a predetermined opening position - allocated to a specific flow cross-section - of the flow control valve (2) based upon a control difference (ΔT_{control difference}), wherein the control difference (ΔT_{control difference}), which is to be calculated, between
a temperature difference (ΔT_{actual}) is formed from the detected input-side supply temperature (T_{supply}) and the output-side return temperature (Tᵣₑₜᵤᵣₙ) and a predetermined temperature spread (ΔT_{desired}) from the output-side return temperature (Tᵣₑₜᵤᵣₙ) to the input-side supply temperature (T_{supply}),
an interface (9) for receiving an external activation signal for activating the calculation means (8) and/or the adjustment apparatus (1); wherein
the adjustment apparatus (1) comprises a time detection means and a storage means which are configured to detect and store a preceding or current activation period of the activation signal and/or a deactivation period between two activations; and
the calculation means (8) is configured to variably determine the temperature spread (ΔT_{desired}) based upon an activation period and/or a deactivation period;
**characterised in that**
the adjustment apparatus (1) is configured to determine a hydraulic minimum opening position (S_{V-hydraulic-min}) of the flow control valve (2), at which a minimum flow can be detected, along an actuating travel path; and
the adjustment apparatus (1) detects a flow through the flow control valve (2) based upon a temperature change of the heating medium in the consumer loop (3); wherein
the determination of the hydraulic minimum opening position (S_{V-hydraulic-min}) comprises iterations of different opening positions along the actuating travel path of the flow control valve (2);
each iteration of an opening position of the flow control valve (2) comprises at least one detection of the flow through the flow control valve (2); and
the determination of the hydraulic minimum opening position (S_{V-hydraulic-min}) extends over a plurality of external temperature regulating requests to the consumer loop (3), and missing iterations of the determination which are still pending after deactivations of the adjustment apparatus (1) between the temperature regulating requests are continued during renewed activations of the adjustment apparatus (1).

3. Adjustment apparatus (1) as claimed in claim 1 or 2, wherein
the first iteration begins at a hydraulic opening position (S_{V-hydraulic}), at which a flow through the flow control valve (2) is to be expected; and
the adjustment apparatus (1) adjusts in an offset manner an opening position of the flow control valve (2) for a subsequent iteration in the direction of a closed position (S_{V-min}) of the flow control valve (2) if a flow through the flow control valve (2) is detected.

4. Adjustment apparatus (1) as claimed in claim 3, wherein
the adjustment apparatus (1) adjusts in an offset manner an opening position of the flow control valve (2) for a subsequent iteration opposite to the direction to the closed position (S_{V-min}) of the flow control valve (2) if no flow through the flow control valve (2) is detected.

5. Adjustment apparatus (1) as claimed in any one of claims 1 to 4, wherein
the adjustment apparatus (1) offsets an opening position of the flow control valve (2) during a subsequent iteration by a distance along the actuating travel path equal to half the amount of the offset distance during the preceding iteration.

6. Adjustment apparatus (1) as claimed in any one of claims 1 to 5, wherein
the adjustment apparatus (1) determines the hydraulic minimum opening position (S_{V-hydraulic-min}) within a predetermined number of iterations of different opening positions of the flow control valve (2).

7. Adjustment apparatus (1) as claimed in any one of claims 1 to 6, wherein
if no flow through the flow control valve (2) is detected, an iteration of the corresponding opening position still comprises a detection of the flow at a higher opening position of the flow control valve (2).

8. Adjustment apparatus (1) as claimed in any one of claims 1 to 7, wherein
each iteration comprises a predetermined number of detections of flow through the flow control valve (2) at an opening position of the flow control valve (2).

9. Adjustment apparatus (1) as claimed in any one of claims 1 to 8, wherein
between each iteration of an opening position, between each detection of the flow within an iteration of an opening position, and/or between an activation and a continuation of pending iterations of the determination, a predetermined blocking period is initially run, for which the flow control valve (2) is closed and/or during which no temperature is detected.

10. Adjustment apparatus (1) as claimed in any one of claims 1 to 9, wherein
the continuation of an interrupted iteration of the determination of the hydraulic minimum opening position (S_{V-hydraulic-min}) is temporarily suspended for a temperature regulating request;
if no flow through the flow control valve (2) was previously detected at the opening position of the interrupted iteration.

11. Adjustment apparatus (1) as claimed in any one of claims 1 to 10, wherein
the adjusting apparatus (1) performs the determination of the hydraulic minimum opening position (S_{V-hydraulic-min}) if it has been disconnected from a power supply, if a disassembly in relation to the flow control valve (2) has been detected by means of the actuator (6) and/or a predetermined switching pattern in relation to the activation has been detected.

12. Adjustment apparatus (1) as claimed in any one of claims 1 to 11, wherein
the adjustment apparatus (1) performs the determination of the hydraulic minimum opening position (S_{V-hydraulic-min}) when a predetermined repetition interval expires.

13. Method for self-regulating adjustment of a flow of a liquid heating medium through a consumer loop (3) comprising a heat exchanger (30) in a temperature regulating system (10) for buildings having a temperature regulating source (4) and a pump (5) by means of an adjustment apparatus (1) for a flow control valve (2);
wherein the method comprises at least the steps of:
detecting an input-side supply temperature (T_{supply}) and an output-side return temperature (Tᵣₑₜᵤᵣₙ) of the through-flowing heating medium at the consumer loop (3);
adjusting an opening position - allocated to a specific flow cross-section - of the flow control valve (2) such that a temperature difference (ΔT_{actual}) formed from the detected input-side supply temperature (T_{supply}) and the output-side return temperature (Tᵣₑₜᵤᵣₙ) is brought up to a predetermined temperature spread (ΔT_{desired}) from the output-side return temperature (Tᵣₑₜᵤᵣₙ) to the input-side supply temperature (T_{supply});
**characterised by the steps of:**
determining a hydraulic minimum opening position (S_{V-hydraulic-min}) of the flow control valve (2), at which a minimum flow can be detected, along an actuating travel path; by means of
detecting a flow through the flow control valve (2) based upon a temperature change of the heating medium in the consumer loop (3); wherein
the determination of the hydraulic minimum opening position (S_{V-hydraulic-min}) comprises iterations of different opening positions along the actuating travel path of the flow control valve (2);
each iteration of an opening position of the flow control valve (2) comprises at least one detection of the flow through the flow control valve (2); and
the determination of the hydraulic minimum opening position (S_{V-hydraulic-min}) extends over a plurality of external temperature regulating requests to the consumer loop (3), and missing iterations of the determination which are still pending after deactivations of the adjustment apparatus (1) between the temperature regulating requests are continued during renewed activations of the adjustment apparatus (1).

14. Method for self-regulating adjustment of a flow of a liquid heating medium through an externally activatable consumer loop (3) comprising a heat exchanger (30) in a temperature regulating system (10) for buildings having a temperature regulating source (4) and a pump (5) by means of an adjustment apparatus (1) for a flow control valve (2);
wherein the method comprises at least the steps of:
detecting a preceding or current activation period and/or a deactivation period of the consumer loop (3);
detecting an input-side supply temperature (T_{supply}) and an output-side return temperature (Tᵣₑₜᵤᵣₙ) of the through-flowing heating medium at the consumer loop (3);
determining a variable temperature spread (ΔT_{desired}) from the output-side return temperature (Tᵣₑₜᵤᵣₙ) to the input-side supply temperature (T_{supply}) based upon the activation period and/or the deactivation period;
calculating a control difference (ΔT_{control difference}) between a temperature difference (ΔT_{actual}) from the detected input-side supply temperature (T_{supply}) and the output-side return temperature (Tᵣₑₜᵤᵣₙ), as well as the predetermined temperature spread (ΔT_{desired}); and
calculating and adjusting an adjustable flow cross-section in the consumer loop (3) based upon the control difference (ΔT_{control difference}); wherein an opening position - allocated to the calculated flow cross-section - of the flow control valve (2) is adjusted in the consumer loop (3);
**characterised by the steps of:**
determining a hydraulic minimum opening position (S_{V-hydraulic-min}) of the flow control valve (2), at which a minimum flow can be detected, along an actuating travel path; by means of
detecting a flow through the flow control valve (2) based upon a temperature change of the heating medium in the consumer loop (3); wherein
the determination of the hydraulic minimum opening position (S_{V-hydraulic-min}) comprises iterations of different opening positions along the actuating travel path of the flow control valve (2);
each iteration of an opening position of the flow control valve (2) comprises at least one detection of the flow through the flow control valve (2); and
the determination of the hydraulic minimum opening position (S_{V-hydraulic-min}) extends over a plurality of external temperature regulating requests to the consumer loop (3), and missing iterations of the determination which are still pending after deactivations of the adjustment apparatus (1) between the temperature regulating requests are continued during renewed activations of the adjustment apparatus (1).

15. Method as claimed in claim 13 or 14, wherein
the first iteration begins at a hydraulic opening position (S_{V-hydraulic}), at which a flow through the flow control valve (2) is to be expected; and
an opening position of the flow control valve (2) is offset for a subsequent iteration in the direction of a closed position (S_{V-min}) of the flow control valve (2) if a flow through the flow control valve (2) is detected.

16. Method as claimed in claim 15, wherein
an opening position of the flow control valve (2) is offset for a subsequent iteration opposite to the direction to the closed position (S_{V-min}) of the flow control valve (2) if no flow through the flow control valve (2) is detected.

17. Method as claimed in any one of claims 13 to 16, wherein
an opening position of the flow control valve (2) is offset during a subsequent iteration by a distance along the actuating travel path equal to half the amount of the offset distance during the preceding iteration.

18. Method as claimed in any one of claims 13 to 17, wherein
the hydraulic minimum opening position (S_{V-hydraulic-min}) is determined within a predetermined number of iterations of different opening positions of the flow control valve (2).

19. Method as claimed in any one of claims 13 to 18, wherein
if no flow through the flow control valve (2) is detected, an iteration of the corresponding opening position still comprises a detection of the flow at a higher opening position of the flow control valve (2).

20. Method as claimed in any one of claims 13 to 19, wherein
each iteration comprises a predetermined number of detections of flow through the flow control valve (2) at an opening position of the flow control valve (2).

21. Method as claimed in any one of claims 13 to 20, wherein
between each iteration of an opening position, between each detection of the flow within an iteration of an opening position, and/or between an activation and a continuation of pending iterations of the determination, a predetermined blocking period is initially run, for which the flow control valve (2) is closed and/or during which no temperature is detected.

22. Method as claimed in any one of claims 13 to 21, wherein
the continuation of an interrupted iteration of the determination of the hydraulic minimum opening position (S_{V-hydraulic-min}) is temporarily suspended for a temperature regulating request;
if no flow through the flow control valve (2) was previously detected at the opening position of the interrupted iteration.

23. Method as claimed in any one of claims 13 to 22, wherein
the determination of the hydraulic minimum opening position (S_{V-hydraulic-min}) is performed if the adjustment apparatus (1) has been disconnected from a power supply, if a disassembly in relation to the flow control valve (2) has been detected and/or a predetermined switching pattern in relation to the activation has been detected.

24. Method as claimed in any one of claims 13 to 23, wherein
the determination of the hydraulic minimum opening position (S_{V-hydraulic-min}) is performed when a predetermined repetition interval expires.

## Revendications

1. Dispositif de réglage (1) pour le réglage autorégulant d'une vanne de régulation de débit (2) d'une boucle de consommation (3) avec échangeur de chaleur (30), en particulier dans un système de régulation de température (10) pour bâtiments avec une source de régulation de température (4), un fluide caloporteur liquide et une pompe (5), le dispositif de réglage (1) présentant :
un organe de réglage (6) qui est agencé de manière à pouvoir être couplé à la vanne de régulation de débit (2) de telle sorte qu'une position d'ouverture de la vanne de régulation de débit (2) peut être réglée et détectée par le dispositif de réglage (1) entre une position fermée (S_{V min}) et une position ouverte, en particulier graduellement ou par étapes ;
des moyens de détection de température (7) qui détectent une température d'arrivée côté entrée (T_{Vorlauf}) et une température de retour côté sortie (T_{Rücklauf}) du fluide caloporteur qui s'écoule par rapport à la boucle de consommation (3) ; dans lequel
un moyen de calcul (8), qui est conçu pour calculer une commande de l'organe de réglage (6), qui correspond à une position d'ouverture prédéterminée - associée à une section d'écoulement déterminée - de la vanne de régulation de débit (2), de telle sorte, qu'une différence de température (ΔT_{Ist}) entre la température d'arrivée côté entrée (T_{Vorlauf}) détectée et la température de retour côté sortie (T_{Rücklauf}) est amenée à un écart de température prédéterminé (ΔT_{Soll}) entre la température de retour côté sortie (T_{Rücklauf}) et la température d'arrivée côté entrée (T_{Vorlauf}) ; et
le dispositif de réglage (1) détecte un débit à travers la vanne de régulation de débit (2) sur la base d'un changement de température du fluide caloporteur dans la boucle de consommation (3) ;
**caractérisé en ce que**
le dispositif de réglage (1) est conçu pour déterminer une position d'ouverture hydraulique minimale (S_{V-hydraulisch-min}) de la vanne de régulation de débit (2), à laquelle un débit minimal peut être détecté, le long d'une course de réglage ; et
la détermination de la position d'ouverture hydraulique minimale (S_{V-hydraulisch-min}) comprend des itérations de différentes positions d'ouverture le long de la course de réglage de la vanne de régulation de débit (2) ;
chaque itération d'une position d'ouverture de la vanne de régulation de débit (2) comprend au moins une détection du débit à travers la vanne de régulation de débit (2) ; et
la détermination de la position d'ouverture hydraulique minimale (S_{V-hydraulisch-min}) s'étend sur plusieurs demandes de régulation de température externes à la boucle de consommation (3), et les itérations manquantes de la détermination, qui sont encore en suspens après des désactivations du dispositif de réglage (1) entre les demandes de régulation de température, sont poursuivies lors de nouvelles activations du dispositif de réglage (1).

2. Le dispositif de réglage (1) pour le réglage autorégulant d'une vanne de régulation de débit (2) d'une boucle de consommation (3) avec échangeur de chaleur (30), en particulier dans un système de régulation de température (10) pour des bâtiments avec une source de régulation de température (4), un fluide caloporteur liquide et une pompe (5), le dispositif de réglage (1) présentant :
un organe de réglage (6) à commande électrique, qui est agencé de manière à pouvoir être couplé à la vanne de régulation de débit (2) de telle sorte qu'une position d'ouverture de la vanne de régulation de débit (2) peut être réglée et détectée par le dispositif de réglage (1) entre une position fermée (S_{V min}) et une position ouverte, en particulier graduellement ou par étapes ;
des moyens de détection de température (7) qui détectent une température d'arrivée côté entrée (T_{Vorlauf}) et une température de retour côté sortie (T_{Rücklauf}) du fluide caloporteur qui s'écoule par rapport à la boucle de consommation (3) ;
un moyen de calcul (8) qui est conçu pour calculer une commande électrique de l'organe de réglage (6), qui correspond à une position d'ouverture prédéterminée - associée à une certaine section transversale d'écoulement - de la vanne de régulation de débit (2), sur la base d'une différence de régulation (ΔT_{Regeldifferenz}), la différence de régulation à calculer (ΔT_{Regeldifferenz}) étant comprise entre
une différence de température (ΔT_{Ist}) à partir de la température d'arrivée côté entrée (T_{Vorlauf}) détectée et de la température de retour côté sortie (T_{Rücklauf}), et un écart de température prédéterminé (ΔT_{Soll}) entre la température de retour côté sortie (T_{Rücklauf}) et la température d'arrivée côté entrée (T_{Vorlauf}) ;
une interface (9) pour recevoir un signal d'activation externe pour activer le moyen de calcul (8) et/ou le dispositif de réglage (1) ; dans lequel
le dispositif de réglage (1) comprend un moyen de détection de temps et un moyen de stockage agencés pour détecter et stocker une durée d'activation précédente ou
actuelle du signal d'activation et/ou une durée de désactivation entre deux activations ; et
le moyen de calcul (8) est adapté pour déterminer de manière variable l'écart de température (ΔT_{Soll}) sur la base d'une durée d'activation et/ou d'une durée de désactivation ;
**caractérisé en ce que**
le dispositif de réglage (1) est adapté pour déterminer une position d'ouverture hydraulique minimale (S_{V-hydraulisch-min}) de la vanne de régulation de débit (2), à laquelle un débit minimal peut être détecté, le long d'une course de réglage ; et
le dispositif de réglage (1) détecte un débit à travers la vanne de régulation de débit (2) sur la base d'un changement de température du fluide caloporteur dans la boucle de consommation (3) ; dans lequel
la détermination de la position d'ouverture hydraulique minimale (S_{V-hydraulisch-min}) comprend des itérations de différentes positions d'ouverture le long de la course de réglage de la vanne de régulation de débit (2) ;
chaque itération d'une position d'ouverture de la vanne de régulation de débit (2) comprend au moins une détection du débit à travers la vanne de régulation de débit (2) ; et
la détermination de la position d'ouverture hydraulique minimale (S_{V-hydraulisch-min}) s'étend sur plusieurs demandes de régulation de température externes à la boucle de consommation (3), et les itérations manquantes de la détermination, qui sont encore en suspens après des désactivations du dispositif de réglage (1) entre les demandes de régulation de température, sont poursuivies lors de nouvelles activations du dispositif de réglage (1).

3. Le dispositif de réglage (1) selon la revendication 1 ou 2, dans lequel
la première itération commence à une position d'ouverture hydraulique (S_{V-hydraulisch}) à laquelle on peut s'attendre à un écoulement à travers la vanne de régulation de débit (2) ; et
le dispositif de réglage (1) règle une position d'ouverture de la vanne de régulation de débit (2) pour une itération suivante avec un décalage vers une position fermée (S_{V-min}) de la vanne de régulation de débit (2) lorsqu'un débit à travers la vanne de régulation de débit (2) est détecté.

4. Le dispositif de réglage (1) selon la revendication 3, dans lequel
le dispositif de réglage (1) décale une position d'ouverture de la vanne de régulation de débit (2) pour une itération suivante dans la direction opposée à la position fermée (S_{V-min}) de la vanne de régulation de débit (2) lorsqu'aucun débit n'est détecté à travers la vanne de régulation de débit (2).

5. Le dispositif de réglage (1) selon l'une des revendications 1 à 4, dans lequel
le dispositif de réglage (1) décale une position d'ouverture de la vanne de régulation de débit (2) lors d'une itération suivante d'une distance sur la course de réglage qui correspond à la moitié de la valeur de la distance décalée lors de l'itération précédente.

6. Le dispositif de réglage (1) selon l'une des revendications 1 à 5, dans lequel
le dispositif de réglage (1) détermine la position d'ouverture hydraulique minimale (S_{V-hydraulisch-min}) au sein d'un nombre prédéterminé d'itérations de différentes positions d'ouverture de la vanne de régulation de débit (2).

7. Le dispositif de réglage (1) selon l'une des revendications 1 à 6, dans lequel
si aucun débit n'est détecté par la vanne de régulation de débit (2), une itération de la position d'ouverture correspondante comprend encore une détection du débit à une position d'ouverture supérieure de la vanne de régulation de débit (2).

8. Le dispositif de réglage (1) selon l'une des revendications 1 à 7, dans lequel
chaque itération comprend un nombre prédéterminé de détections du débit à travers la vanne de régulation de débit (2) à une position d'ouverture de la vanne de régulation de débit (2).

9. Le dispositif de réglage (1) selon l'une des revendications 1 à 8, dans lequel
entre chaque itération d'une position d'ouverture, entre chaque détection du débit à l'intérieur d'une itération d'une position d'ouverture et/ou entre une activation et une poursuite d'itérations en attente de la détermination, on passe d'abord par une période de blocage prédéterminée, pendant laquelle la vanne de régulation de débit (2) est fermée et/ou pendant laquelle aucune température n'est détectée.

10. Le dispositif de réglage (1) selon l'une des revendications 1 à 9, dans lequel
la poursuite d'une itération interrompue de la détermination de la position d'ouverture hydraulique minimale (S_{V-hydraulisch-min}) est temporairement suspendue pour une demande de régulation de température ;
si, à la position d'ouverture de l'itération interrompue, aucun débit n'a été détecté auparavant par la vanne de régulation de débit (2).

11. Le dispositif de réglage (1) selon l'une des revendications 1 à 10, dans lequel
le dispositif de réglage (1) effectue la détermination de la position d'ouverture hydraulique minimale (S_{V-hydraulisch-min}) lorsqu'il a été déconnecté d'une alimentation électrique, lorsqu'un démontage par rapport à la vanne de régulation de débit (2) a été détecté au moyen de l'organe de réglage (6) et/ou lorsqu'un schéma de commutation prédéterminé par rapport à l'activation a été détecté.

12. Le dispositif de réglage (1) selon l'une des revendications 1 à 11, dans lequel
le dispositif de réglage (1) effectue la détermination de la position d'ouverture hydraulique minimale (S_{V-hydraulisch-min}) lorsqu'un intervalle de répétition prédéterminé s'écoule.

13. Procédé de réglage autorégulé d'un débit d'un fluide caloporteur liquide à travers une boucle de consommation (3) avec échangeur de chaleur (30) dans un système de régulation de température (10) pour bâtiments avec une source de régulation de température (4) et une pompe (5) au moyen d'un dispositif de réglage (1) pour une vanne de régulation de débit (2) ;
le procédé comprenant au moins les étapes suivantes :
détecter une température de départ côté entrée (Tvoriauf) et d'une température de retour côté sortie (T_{Rücklauf}) du fluide caloporteur en circulation au niveau de la boucle de consommation (3) ;
régler une position d'ouverture - associée à une section d'écoulement déterminée - de la vanne de régulation de débit (2) de telle sorte qu'une différence de température (ΔT_{Ist}) entre la température d'arrivée côté entrée (T_{Vorlauf}) détectée et la température de retour côté sortie (T_{Rücklauf}) soit amenée à un écart de température prédéterminé (ΔT_{Soll}) entre la température de retour côté sortie (T_{Rücklauf}) et la température d'arrivée côté entrée (T_{Vorlauf}) ;
**caractérisé par les étapes suivantes :**
déterminer une position d'ouverture hydraulique minimale (S_{V-hydraulisch-min}) de la vanne de régulation de débit (2), pour laquelle un débit minimal peut être détecté, le long d'une course de réglage ; au moyen de
détecter un débit à travers la vanne de régulation de débit (2) sur la base d'un changement de température du fluide caloporteur dans la boucle de consommation (3) ; dans lequel
la détermination de la position d'ouverture hydraulique minimale (S_{V-hydraulisch-min}) comprend des itérations de différentes positions d'ouverture le long de la course de réglage de la vanne de régulation de débit (2) ;
chaque itération d'une position d'ouverture de la vanne de régulation de débit (2) comprend au moins une détection du débit à travers la vanne de régulation de débit (2) ; et
la détermination de la position d'ouverture hydraulique minimale (S_{V-hydraulisch-min}) s'étend sur plusieurs demandes de régulation de température externes à la boucle de consommation (3), et les itérations manquantes de la détermination, qui sont encore en suspens après des désactivations du dispositif de réglage (1) entre les demandes de régulation de température, sont poursuivies lors de nouvelles activations du dispositif de réglage (1).

14. Procédé de réglage autorégulé d'un débit d'un fluide caloporteur liquide à travers une boucle de consommation (3) activable de l'extérieur avec un échangeur de chaleur (30) dans un système de régulation de température (10) pour des bâtiments avec une source de régulation de température (4) et une pompe (5) au moyen d'un dispositif de réglage (1) pour une vanne de régulation de débit (2) ;
le procédé comprenant au moins les étapes suivantes :
détecter une durée d'activation précédente ou actuelle et/ou d'une durée de désactivation de la boucle de consommation (3) ;
détecter une température d'arrivée côté entrée (T_{Vorlauf}) et d'une température de retour côté sortie (T_{Rücklauf}) du fluide caloporteur en circulation au niveau de la boucle de consommation (3) ;
déterminer un écart de température variable (ΔT_{Soll}) entre la température de retour côté sortie (T_{Rücklauf}) et la température d'arrivée côté entrée (T_{Vorlauf}), sur la base de la durée d'activation et/ou de la durée de désactivation ;
calculer une différence de régulation (ΔT_{Regeldifferenz}) entre une différence de température (ΔT_{Ist}) à partir de la température d'arrivée côté entrée (T_{Vorlauf}) et de la température de retour côté sortie (T_{Rücklauf}) détectées, ainsi que l'écart de température prédéterminé (ΔT_{Soll}) ; et
calculer et régler une section de passage réglable dans la boucle de consommation (3) sur la base de la différence de régulation (ΔT_{Regeldifferenz}) ; une position d'ouverture - associée à la section de passage calculée - de la vanne de régulation de débit (2) étant réglée dans la boucle de consommation (3) ;
**caractérisé par les étapes suivantes :**
déterminer une position d'ouverture hydraulique minimale (S_{V-hydraulisch-min}) de la vanne de régulation de débit (2), pour laquelle un débit minimal peut être détecté, le long d'une course de réglage ; au moyen de
détecter un débit à travers la vanne de régulation de débit (2) sur la base d'un changement de température du fluide caloporteur dans la boucle de consommation (3) ; dans lequel
la détermination de la position d'ouverture hydraulique minimale (S_{V-hydraulisch-min}) comprend des itérations de différentes positions d'ouverture le long de la course de réglage de la vanne de régulation de débit (2) ;
chaque itération d'une position d'ouverture de la vanne de régulation de débit (2) comprend au moins une détection du débit à travers la vanne de régulation de débit (2) ; et
la détermination de la position d'ouverture hydraulique minimale (S_{V-hydraulisch-min}) s'étend sur plusieurs demandes de régulation de température externes à la boucle de consommation (3), et les itérations manquantes de la détermination, qui sont encore en suspens après des désactivations du dispositif de réglage (1) entre les demandes de régulation de température, sont poursuivies lors de nouvelles activations du dispositif de réglage (1).

15. Le procédé selon la revendication 13 ou 14, dans lequel
la première itération commence à une position d'ouverture hydraulique (S_{V-hydraulisch}) à laquelle on peut s'attendre à un écoulement à travers la vanne de régulation de débit (2) ; et
une position d'ouverture de la vanne de régulation de débit (2) est décalée vers une position fermée (S_{V-min}) de la vanne de régulation de débit (2) pour une itération suivante lorsqu'un débit à travers la vanne de régulation de débit (2) est détecté.

16. Le procédé selon la revendication 15, dans lequel
une position d'ouverture de la vanne de régulation de débit (2) est déplacée dans le sens opposé à la position de fermeture (S_{V-min}) de la vanne de régulation de débit (2) pour une itération suivante lorsqu'aucun débit n'est détecté à travers la vanne de régulation de débit (2).

17. Le procédé selon l'une quelconque des revendications 13 à 16, dans lequel
une position d'ouverture de la vanne de régulation de débit (2) est décalée, lors d'une itération suivante, d'une distance sur la course de réglage qui correspond à la moitié de la valeur de la distance décalée lors de l'itération précédente.

18. Le procédé selon l'une quelconque des revendications 13 à 17, dans lequel
la position d'ouverture hydraulique minimale (S_{V-hydraulisch-min}) est déterminée à l'intérieur d'un nombre prédéterminé d'itérations de différentes positions d'ouverture de la vanne de régulation de débit (2).

19. Le procédé selon l'une quelconque des revendications 13 à 18, dans lequel
si aucun débit n'est détecté par la vanne de régulation de débit (2), une itération de la position d'ouverture correspondante comprend encore une détection du débit à une position d'ouverture supérieure de la vanne de régulation de débit (2).

20. Le procédé selon l'une des revendications 13 à 19, dans lequel
chaque itération comprend un nombre prédéterminé de détections du débit à travers la vanne de régulation de débit (2) à une position d'ouverture de la vanne de régulation de débit (2).

21. Le procédé selon l'une des revendications 13 à 20, dans lequel
entre chaque itération d'une position d'ouverture, entre chaque détection du débit à l'intérieur d'une itération d'une position d'ouverture et/ou entre une activation et une poursuite d'itérations en attente de la détermination, on passe d'abord par une durée de blocage prédéterminée, pendant laquelle la vanne de régulation de débit (2) est fermée et/ou pendant laquelle aucune température n'est détectée.

22. Le procédé selon l'une des revendications 13 à 21, dans lequel
la poursuite d'une itération interrompue de la détermination de la position d'ouverture hydraulique minimale (S_{V-hydraulisch-min}) est temporairement suspendue pour une demande de régulation de température ;
si, à la position d'ouverture de l'itération interrompue, aucun débit n'a été détecté auparavant par la vanne de régulation de débit (2).

23. Le procédé selon l'une des revendications 13 à 22, dans lequel
la détermination de la position d'ouverture hydraulique minimale (S_{V-hydraulisch-min}) est effectuée lorsque le dispositif de réglage (1) a été déconnecté d'une alimentation électrique, lorsqu'un démontage par rapport à la vanne de régulation de débit (2) a été détecté et/ou lorsqu'un schéma de commutation prédéterminé par rapport à l'activation a été détecté.

24. Le procédé selon l'une des revendications 13 à 23, dans lequel
la détermination de la position d'ouverture hydraulique minimale (S_{V-hydraulisch-min}) est effectuée lorsqu'un intervalle de répétition prédéterminé s'écoule.
